# EUROPEAN PATENT APPLICATION

(11) **EP 4 752 704 A1**
(43) Date of publication of application: **03.06.2026**
(21) Application number: 24884109.0
(22) Date of filing: 09.08.2024
(51) Int. Cl.: G06F 3/0486

(54) **CROSS-DEVICE SERVICE CALLING METHOD, SYSTEM, AND STORAGE MEDIUM**

(30) Priority: 03.11.2023 CN 202311463257; 10.01.2024 CN 202410046013
(71) Applicant: Honor Device Co., Ltd., Shenzhen, Guangdong 518040 (CN)
(72) Inventor: WANG, Yiren, Shenzhen, Guangdong 518040 (CN); SONG, Wenxuan, Shenzhen, Guangdong 518040 (CN); WANG, Long, Shenzhen, Guangdong 518040 (CN); WANG, Lei, Shenzhen, Guangdong 518040 (CN); HU, Yongchao, Shenzhen, Guangdong 518040 (CN)
(74) Representative: Gill Jennings & Every LLP
(86) International application number: PCT/CN2024/111229
(87) International publication number: WO 2025/092102

(57) **Abstract**

This application relates to the field of cross-device control technologies, and provides a cross-device service calling method and system, and a storage medium. In the method, a user may trigger a first electronic device, through a simple and quick operation, to query surrounding online devices and cross-device services provided by the online devices. Based on a user operation, the first electronic device may call and start a cross-device service provided by one of the online devices, for example, may call and start a cross-device service of a second electronic device. The user may capture or generate an object through the called service on a second electronic device side, and the generated object may be transmitted back to the first electronic device. In this way, a simple and quick manner is provided for calling the service of the second electronic device through the first electronic device to capture or generate an object and then transmit the object back to the first electronic device.

## Description

This application claims priority to Chinese Patent Application No. 202311463257.6, filed with the China National Intellectual Property Administration on November 3, 2023 and entitled "CROSS-DEVICE SERVICE CALLING METHOD, ELECTRONIC DEVICE, SYSTEM, AND STORAGE MEDIUM", which is incorporated herein by reference in its entirety.

This application claims priority to Chinese Patent Application No. 202410046013.6, filed with the China National Intellectual Property Administration on January 10, 2024 and entitled "CROSS-DEVICE SERVICE CALLING METHOD AND SYSTEM, AND STORAGE MEDIUM", which is incorporated herein by reference in its entirety.

### TECHNICAL FIELD

This application relates to the field of cross-device control technologies, and in particular, to a cross-device service calling method and system, and a storage medium.

### BACKGROUND

Electronic devices may be classified into a plurality of types, for example, mobile phones that are convenient for photographing but inconvenient for study and office work, and notebook computers that are convenient for study and office work but inconvenient for photographing. In some scenarios, a user may use a mobile phone for photographing and use a notebook computer for study and office work. However, in a scenario in which the notebook computer is used for study or office work, if the user needs to take photos and transmit the photos to the notebook computer, the user needs to first take photos by using the mobile phone, then establish a communication connection between the mobile phone and the notebook computer, and then transmit the photos taken by the mobile phone to the notebook computer. It may be understood that operations in this manner are cumbersome.

### SUMMARY

This application provides a cross-device service calling method and system, and a storage medium, which can provide a simple and quick manner for an electronic device to call a service of another electronic device to capture a photo or another object and then transmit the photo or object back to this electronic device.

To achieve the foregoing objective, the following technical solutions are used in this application:
According to a first aspect, this application provides a cross-device service calling method, including:
displaying, by a first electronic device, a first interface, where the first interface is an interface of a first application;
after receiving a first operation, displaying, by the first electronic device, a second interface, where the second interface includes a first control, and the first control is related to a first service of a second electronic device;
after receiving a second operation performed on the first control, sending, by the first electronic device, a first instruction to the second electronic device;
after receiving the first instruction, displaying, by the second electronic device, a third interface, where the third interface includes a second control, and the third interface is an interface corresponding to the first service of the second electronic device;
after receiving a third operation performed on the second control, sending, by the second electronic device, a first object obtained through the first service to the first electronic device;
after receiving the first object, displaying, by the first electronic device, an identifier of the first object;
after receiving a fourth operation, displaying, by the first electronic device, a fourth interface, where the fourth interface includes an editing window of a second application and the identifier of the first object; and
after receiving a fifth operation performed on an area in which the identifier of the first object is located, inserting, by the first electronic device, the first object into an editing area of the editing window of the second application.

In this application, through the first operation on any interface, the first electronic device may trigger the electronic device to display a cross-device callable service (for example, the first service) of another electronic device (for example, the second electronic device) associated with the first electronic device, and by performing an operation on a control related to the first service of the second electronic device, a user triggers the first electronic device to call the first service of the second electronic device; and after the first service of the second electronic device is started, the first object may be obtained, and the first object may be transmitted back to the first electronic device. It may be understood that this manner of calling a service on another electronic device across devices is very simple and quick.

In addition, after the first electronic device receives the first object transmitted back by the second electronic device, the first electronic device may display a thumbnail of the object on a display, and then the user starts the second application to insert the object into the editing area of the second application. It may be understood that the user does not need to trigger the cross-device call in the area of the editing window of the second application displayed on the electronic device, but may trigger the cross-device call on the interface (certainly, the interface may be any interface) of the first application unrelated to the second application. Flexibility of this cross-device call manner is higher.

In an implementation of the first aspect, the first operation includes a sixth operation and a seventh operation, the sixth operation is a swipe operation starting from a top of a screen of the first electronic device, and the displaying, by the first electronic device, a second interface after receiving a first operation includes:
after receiving the sixth operation, displaying, by the first electronic device, a smart interconnection card; and
after receiving the seventh operation, displaying, by the first electronic device, the second interface, where the seventh operation is performed on an area in which the smart interconnection card is located.

In this application, to avoid an unintentional user operation, the smart interconnection card related to the cross-device call may be displayed first, and then display of the cross-device callable service of the other electronic device may be triggered by the operation on the smart interconnection card.

In another implementation of the first aspect, the first interface includes a taskbar, the taskbar includes a first icon, and the first operation is an operation performed on the first icon.

In this application, when a Windows operating system is involved, the cross-device callable service of the other electronic device may also be triggered through the first icon related to a cross-device call function on the taskbar.

In another implementation of the first aspect, the second operation is a tap operation performed on the first control; or
the second interface includes an icon of the first electronic device, and the second operation is a drag operation starting from an area in which the first control is located and ending at an area in which the icon of the first electronic device is located.

In this application, two manners of tapping or dragging are provided to trigger the first electronic device to call the related service of the second electronic device. The manners are relatively diverse, and different manners may be set based on different models or different applicable groups of people. For example, drag operations are not suitable for some electronic devices without touchscreens. Drag operations may be more suitable for some electronic devices used by young people.

In another implementation of the first aspect, the second operation is a drag operation starting from the area in which the first control is located and ending at the area in which the icon of the first electronic device is located, and the method further includes:
in a dragging process corresponding to the second operation, displaying a first floating control at a touch point of the second operation, where the first floating control includes an icon of the first service and/or text information of the first service, and the first floating control is used to prompt a user that the first floating control currently being dragged is the first service; and
after the second operation ends, displaying the icon of the first service and/or the text information of the first service around the icon of the first electronic device.

In this application, the icon and/or the text information of the first service in the first floating control may prompt the user of the service currently being called. Dragging the first floating control to the surrounding of the icon of the first electronic device can avoid accurately triggering the electronic device to be called when there are multiple cross-device callable electronic devices on the same interface.

In another implementation of the first aspect, after the receiving, by the first electronic device, a second operation performed on the first control, and before the displaying, by the first electronic device, an identifier of the first object, the method further includes:
displaying, by the first electronic device, a fifth interface, where the fifth interface includes a second floating control and a blocking window, the second floating control includes a smart interconnection icon and/or first text information, and the blocking window is used to prompt a user that the first electronic device is calling the first service of the second electronic device.

In this application, because an Android system is not suitable for running multiple applications in the foreground simultaneously, a blocking window may be set to prevent another operation of the user from interrupting the cross-device call. Certainly, the second floating control may also be set to prompt the user that the cross-device call is currently being performed.

In another implementation of the first aspect, the displaying, by the first electronic device, an identifier of the first object includes:
canceling, by the first electronic device, display of the blocking window on the fifth interface, and displaying the identifier of the first object on the fifth interface.

In this application, the blocking window is used to prevent the current cross-device call from being interrupted. Therefore, after the first electronic device ends the cross-device call, display of the blocking window may be canceled, so that the user can use the received object.

In another implementation of the first aspect, the first interface includes an editing window of the first application, and the fifth interface also includes an editing window of the first application; and
after the displaying, by the first electronic device, the identifier of the first object on the fifth interface, the method further includes:
receiving, by the first electronic device, an eighth operation, where the eighth operation is a drag operation starting from the area in which the identifier of the first object is located and ending at an editing area of the editing window of the first application; and
inserting, by the first electronic device, the first object into the editing area of the editing window of the first application in response to the eighth operation.

In this application, the electronic device may alternatively call the first service of the second electronic device while displaying the first application capable of inserting the first object. After the object transmitted back by the first service of the second electronic device is received, an operation may be directly performed on the object on the current interface to insert the object into the editing area of the first application.

In another implementation of the first aspect, the fifth operation is a drag operation starting from the area in which the identifier of the first object is located and ending at the editing area of the editing window of the second application.

In another implementation of the first aspect, after the displaying, by the first electronic device, the identifier of the first object on the fifth interface, the method further includes:
after receiving a ninth operation performed on the second floating control of the fifth interface, sending, by the first electronic device, a second instruction to the second electronic device;
after receiving the second instruction, displaying, by the second electronic device, a sixth interface, where the sixth interface includes a third control, and the sixth interface is an interface corresponding to the first service of the second electronic device;
after receiving a ninth operation performed on the third control, sending, by the second electronic device, a second object obtained through the first service to the first electronic device; and
after receiving the second object, displaying, by the first electronic device, an identifier of the second object.

In this application, after the first service of the second electronic device is called once, the first service of the second electronic device may continue to be called to obtain an object again through the cross-device call.

In another implementation of the first aspect, when the first electronic device displays multiple identifiers of multiple objects received from the first electronic device, the multiple identifiers of the multiple objects are displayed in a stacked or tiled manner; or an identifier of a most recently received object is displayed and display of identifiers of historically received objects is canceled.

In this application, diverse display manners may be used to meet different application scenarios. For example, when the screen of the electronic device is small, the stacked manner may be used for display, so that the user can view the received objects in a limited area; or when the screen of the electronic device is large, the tiled manner may be used for display, so that the user can view every object.

In another implementation of the first aspect, the ninth operation includes a tenth operation and an eleventh operation, and the sending, by the first electronic device, a second instruction to the second electronic device after receiving a ninth operation performed on the second floating control of the fifth interface includes:
after receiving the tenth operation performed on the second floating control of the fifth interface, displaying, by the first electronic device, a first floating window, where the first floating window includes a fourth control, and the fourth control is related to the first service of the second electronic device; and
after receiving the eleventh operation performed on the fourth control, sending, by the first electronic device, the second instruction to the second electronic device.

In this application, to avoid an unintentional operation, two consecutive steps may be used to trigger the electronic device to re-call the same service of the same electronic device to obtain another object of the same type. It may be understood that the re-triggering manner is quick and simple.

In another implementation of the first aspect, after the displaying, by the first electronic device, an identifier of the first object, the method further includes:
after receiving a twelfth operation, displaying, by the first electronic device, a seventh interface, where the seventh interface includes a fifth control, and the fifth control is related to a second service of the second electronic device; and
after receiving a thirteenth operation performed on the fifth control, sending, by the first electronic device, a third instruction to the second electronic device, where the third instruction is used to call the second service of the second electronic device to obtain a third object.

In this application, after the first service of the second electronic device is called, the second service of the second electronic device may continue to be called to obtain different types of objects through the cross-device call.

In another implementation of the first aspect, after the displaying, by the first electronic device, an identifier of the first object, the method further includes:
after receiving a fourteenth operation, displaying, by the first electronic device, an eighth interface, where the eighth interface includes a sixth control, and the sixth control is related to a first service of a third electronic device; and
after receiving the fourteenth operation performed on the sixth control, sending, by the first electronic device, a fourth instruction to the third electronic device, where the fourth instruction is used to call the first service of the third electronic device to obtain a fourth object.

In this application, when there are multiple other electronic devices around that can be called by the first electronic device, after finishing calling the second electronic device, the first electronic device may continue to call the third electronic device. This provides greater flexibility for editing a document on the first electronic device, and the method can be applied to more application scenarios.

In another implementation of the first aspect, the second operation is a tap operation performed on the first control, and after the receiving, by the first electronic device, a second operation performed on the first control, and before the displaying, by the first electronic device, an identifier of the first object, the method further includes:
displaying, by the first electronic device, a first window, where the first window is used to prompt a user that the first electronic device is calling the first service of the second electronic device.

In another implementation of the first aspect, before the displaying, by the first electronic device, an identifier of the first object, the method further includes:
canceling, by the first electronic device, display of the first window.

In another implementation of the first aspect, after the displaying, by the first electronic device, an identifier of the first object for first duration, the method further includes:
canceling, by the first electronic device, display of the identifier of the first object.

In this application, a disappearance mechanism is provided for the identifier of the first object, so that display of objects that are not of interest to the user is automatically canceled without being triggered by the user, and that user experience is higher.

In another implementation of the first aspect, after the canceling, by the first electronic device, display of the first window, the method further includes:
displaying, by the first electronic device, a second window, where the second window includes a seventh control;
after the first electronic device receives a fifteenth operation performed on the seventh control, canceling, by the first electronic device, display of the second window; and
after canceling display of the second window, displaying, by the first electronic device, the first window.

In another implementation of the first aspect, after the displaying, by the first electronic device, an identifier of the first object, the method further includes:
displaying, by the first electronic device, a ninth interface, where the ninth interface is any interface including the taskbar, and the taskbar includes the first icon;
after receiving a sixteenth operation performed on the first icon, displaying, by the first electronic device, a third window, where the sixteenth operation is different from the first operation, the third window includes an eighth control, and the eighth control is related to the first service of the second electronic device; and
after receiving a seventeenth operation performed on the eighth control, canceling, by the first electronic device, display of the third window, displaying a fourth window, and sending a fifth instruction to the second electronic device, where the fifth instruction is used to call the first service of the second electronic device, and the fourth window is used to prompt the user that the first electronic device is calling the first service of the second electronic device.

This application further provides another quick manner to trigger the first electronic device to re-call the same service of the same electronic device to obtain another object of the same type.

In another implementation of the first aspect, the third operation includes an eighteenth operation and a nineteenth operation; and the sending, by the second electronic device, a first object obtained through the first service to the first electronic device after receiving a third operation performed on the second control includes:
after the second electronic device receives the eighteenth operation performed on the second control, displaying, by the second electronic device, a tenth interface, where the tenth interface includes the first object and a ninth control; and
after receiving the nineteenth operation performed on the ninth control, sending, by the second electronic device, the first object to the first electronic device.

In another implementation of the first aspect, after the receiving, by the second electronic device, the nineteenth operation performed on the ninth control, the method further includes:
displaying, by the second electronic device, an eleventh interface, where a status bar of the eleventh interface displays a third floating control, and the eleventh interface is a system desktop or an interface displayed by the second electronic device before the third interface is displayed; and
after the second electronic device receives a twentieth operation performed on the third floating control, displaying, by the second electronic device, a twelfth interface.

In this application, a re-call of the second electronic device by the first electronic device may also be triggered from the called second electronic device side, to obtain another object obtained through the same service. This manner is more suitable for scenarios in which the user uses the second electronic device to obtain multiple objects of multiple different types, thereby improving user experience.

In another implementation of the first aspect, the twentieth operation includes a twenty-first operation and a twenty-second operation, and the displaying, by the second electronic device, a twelfth interface after the second electronic device receives a twentieth operation performed on the third floating control includes:
after receiving the twenty-first operation performed on the third floating control, displaying, by the second electronic device, a fifth window, where the fifth window includes a tenth control, and the tenth control is related to the first service of the second electronic device; and
after receiving the twenty-second operation performed on the tenth control, displaying, by the second electronic device, a thirteenth interface, where the thirteenth interface is used to obtain an object through the first service of the second electronic device.

In this application, two steps may also be used to trigger a re-call by the first electronic device to obtain another object obtained through the same service, thereby avoiding an unintentional operation.

According to a second aspect, an electronic device is provided and includes a processor. The processor is configured to run a computer program stored in a memory, to implement the steps performed by the first electronic device or the steps performed by the second electronic device in the first aspect of this application.

According to a third aspect, a computer-readable storage medium is provided. The computer-readable storage medium stores a computer program, and when the computer program is executed by one or more processors, the steps performed by the first electronic device or the steps performed by the second electronic device in the first aspect of this application are implemented.

According to a fourth aspect, a cross-device service calling system is provided and includes a first electronic device and a second electronic device. The first electronic device and the second electronic device implement the method according to any implementation of the first aspect of this application.

According to a fifth aspect, an embodiment of this application provides a computer program product. When the computer program product runs on a device, the electronic device is enabled to perform the steps performed by the first electronic device or the steps performed by the second electronic device in the first aspect of this application.

It may be understood that, for beneficial effects of the second aspect to the fifth aspect, reference may be made to related descriptions in the first aspect. Details are not described herein again.

### BRIEF DESCRIPTION OF DRAWINGS

FIG. 1 is a schematic diagram of a hardware structure of an electronic device according to an embodiment of this application;
FIG. 2 is a schematic diagram of an interface of a cross-device call entry on a tablet computer according to an embodiment of this application;
FIG. 3 to FIG. 5 are schematic diagrams of interfaces on a tablet computer when a photographing service of a mobile phone is called by the tablet computer according to an embodiment of this application;
FIG. 6A to FIG. 6C are a schematic diagram of an interface on a called mobile phone side when a photographing service of a mobile phone is called by a tablet computer according to an embodiment of this application;
FIG. 7 and FIG. 8 are schematic diagrams of interfaces after a tablet computer receives a photo from a mobile phone according to an embodiment of this application;
FIG. 9 is a schematic diagram of an interface when a re-call of a photographing service of a mobile phone is triggered from a tablet computer side according to an embodiment of this application;
FIG. 10A and FIG. 10B are a schematic diagram of an interface when a re-call of a photographing service by a tablet computer is triggered from a mobile phone side according to an embodiment of this application;
FIG. 11A and FIG. 11B are a schematic diagram of an interface on a notebook computer when a photographing service of a mobile phone is called by the notebook computer according to an embodiment of this application;
FIG. 12A and FIG. 12B are a schematic diagram of an interface after a notebook computer receives a photo from a mobile phone according to an embodiment of this application;
FIG. 13A and FIG. 13B are a schematic diagram of an interface when a re-call of a photographing service of a mobile phone is triggered from a notebook computer side according to an embodiment of this application;
FIG. 14A and FIG. 14B are a schematic diagram of another interface when a re-call of a photographing service of a mobile phone is triggered from a notebook computer side according to an embodiment of this application; and
FIG. 15 is a schematic diagram of a display manner of an object received by a caller according to an embodiment of this application.

### DESCRIPTION OF EMBODIMENTS

In the following descriptions, for the purpose of description instead of limitation, specific details such as a specific system structure and a technology are provided to facilitate a thorough understanding of embodiments of this application. However, persons skilled in the art should understand that this application may also be implemented in another embodiment without these specific details.

It should be understood that when being used in this specification and the appended claims of this application, the term "include" indicates presence of a described feature, entirety, step, operation, element, and/or component, but does not rule out presence or addition of one or more other features, entireties, steps, operations, elements, components, and/or sets thereof.

It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects.

In addition, in the descriptions of the specification and the appended claims of this application, the terms such as "first", "second", "third", and "fourth" are used only to distinguish between descriptions, and cannot be understood as an indication or implication of relative importance.

Reference to "an embodiment", "some embodiments", or the like described in this specification of this application means that one or more embodiments of this application include a specific feature, structure, or characteristic described with reference to the embodiment. Therefore, statements such as "in an embodiment", "in some embodiments", "in some other embodiments", and "in other embodiments" that appear in different parts of this specification do not necessarily refer to a same embodiment, but mean "one or more but not all embodiments", unless otherwise specially emphasized in another manner. The terms "comprise", "include", "have", and variants thereof all mean "include but are not limited to", unless otherwise specially emphasized in another manner.

Embodiments of this application provide a cross-device service calling method, so that one electronic device can call a service of another electronic device. The electronic device may be an electronic device such as a tablet computer, a mobile phone, a wearable device, a notebook computer, an ultra-mobile personal computer (ultra-mobile personal computer, UMPC), a netbook, or a personal digital assistant (personal digital assistant, PDA). Types of the two electronic devices may be the same or different, and the specific types of the electronic devices are not limited in embodiments of this application.

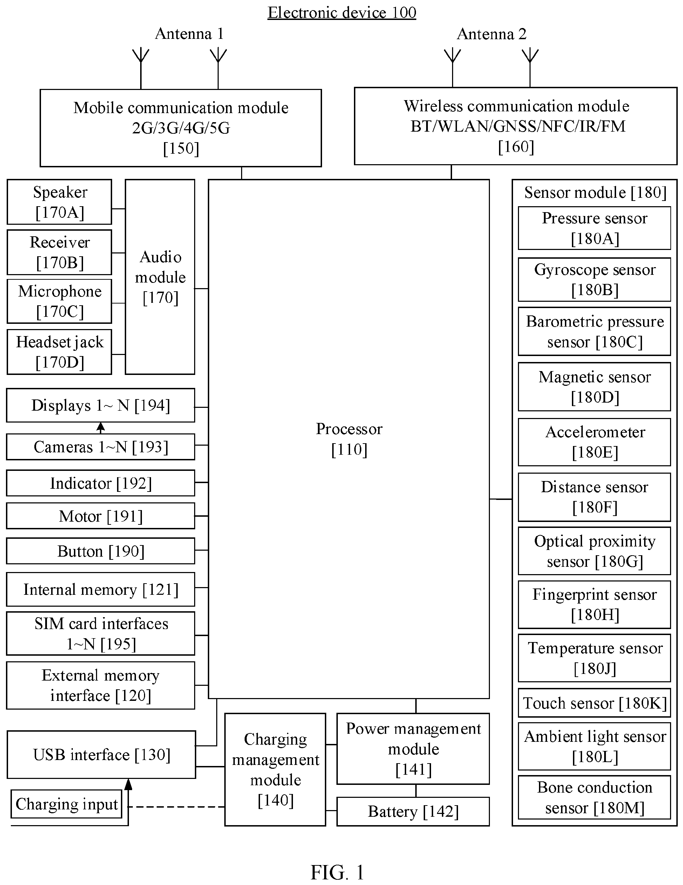

FIG. 1 is a schematic diagram of a structure of an electronic device. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

The sensor module 180 may include a pressure sensor 180A, a gyroscope sensor 180B, a barometric pressure sensor 180C, a magnetic sensor 180D, an accelerometer 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of this application does not constitute a specific limitation on the electronic device 100. In some other embodiments of this application, the electronic device 100 may include more or fewer components than those shown in the figure, some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the electronic device 100. The controller may generate an operation control signal based on an instruction operation code and a time sequence signal, to complete control over instruction fetching and instruction execution. In an example, an embodiment of this application can implement, by using the processor, a cross-device service calling method provided in an embodiment of this application.

The internal memory 121 may be configured to store computer-executable program code, and the executable program code includes instructions. The processor 110 performs various function applications and data processing of the electronic device 100 by running the instructions stored in the internal memory 121. The internal memory 121 may include a program storage area and a data storage area. In an example, the internal memory may be configured to store program code corresponding to a cross-device service call; or may be configured to store received photos or other objects that are captured or generated by another electronic device.

A wireless communication function of the electronic device 100 may be implemented through the antenna 1, the antenna 2, the mobile communication module 150, the wireless communication module 160, the modem processor, the baseband processor, and the like.

The wireless communication module 160 may provide a wireless communication solution including a wireless local area network (wireless local area network, WLAN) (for example, a Wireless Fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like and applied to the electronic device 100. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal through the antenna 2 into an electromagnetic wave for radiation.

In an example, in an embodiment of this application, an electronic device serving as a caller and an electronic device serving as a callee may communicate through respective wireless communication modules and transmit photos or other objects or other related instructions.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology.

The pressure sensor 180A is configured to sense a pressure signal and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects intensity of the touch operation by using the pressure sensor 180A. The electronic device 100 may also calculate a touch position based on a detection signal of the pressure sensor 180A.

The touch sensor 180K is also referred to as a "touch panel". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer the detected touch operation to the application processor to determine a type of a touch event. A visual output related to the touch operation may be provided via the display 194. In some other embodiments, the touch sensor 180K may alternatively be disposed on a surface of the electronic device 100, at a position different from that of the display 194.

In embodiments of this application, the pressure sensor and/or the touch sensor may be configured to detect various gestures input by a user.

The electronic device 100 implements a display function by using the GPU, the display 194, the application processor, and the like. The GPU is a microprocessor for image processing, and is connected to the display 194 and the application processor. The GPU is configured to perform mathematical and geometric computation for graphics rendering. The processor 110 may include one or more GPUs, and the GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. In embodiments of this application, interfaces in various accompanying drawings provided in embodiments of this application may be displayed via the display.

The camera 193 is configured to capture a still image or a video. An optical image of an object is generated by using a lens and projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, so that the electrical signal is converted into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

In embodiments of this application, a specific structure of an execution entity of a cross-device service calling method is not specifically limited, provided that code in which the cross-device service calling method provided in embodiments of this application is recorded can be run to perform communication based on the cross-device service calling method provided in embodiments of this application. For example, the execution entity of the cross-device service calling method provided in embodiments of this application may be a functional module that is in an electronic device and that can invoke a program and execute the program, or may be a communication apparatus, for example, a chip, applied to an electronic device.

Electronic devices may be classified into a plurality of types, for example, mobile phones that are convenient for photographing but inconvenient for study and office work, and notebook computers or tablet computers that are convenient for study and office work but inconvenient for photographing. In some scenarios, a user may use a mobile phone to take a photo and use a notebook computer or a tablet computer for study and office work; however, when the user needs to insert the photo taken by the mobile phone into a document on the notebook computer or the tablet computer, the user needs to first transmit the photo taken by the mobile phone to the notebook computer or the tablet computer, and then insert the photo transmitted to the notebook computer or the tablet computer into the document on the notebook computer or the tablet computer.

In a scenario example, a college student may carry a mobile phone and a tablet computer into a classroom for attending a class. During the class, the college student may use the tablet computer to take class notes, and may also use the mobile phone that is convenient for photographing to take photos of lecture materials demonstrated by a teacher; and if the college student needs to insert pictures of the lecture materials taken by the mobile phone into the class notes recorded on the tablet computer, the college student needs to use a device collaboration function between the mobile phone and the tablet computer or use instant messaging software to transmit the pictures taken by the mobile phone to the tablet computer, and then insert the pictures transmitted to the tablet computer into the class notes on the tablet computer.

In another scenario example, when a journalist uses a notebook computer to write a news article, if the journalist needs to insert photos taken by a mobile phone into the news article, the journalist also needs to use a device collaboration function between the mobile phone and the notebook computer or use instant messaging software to transmit pictures taken by the mobile phone to the notebook computer, and then insert the pictures transmitted to the notebook computer into the news article.

The foregoing scenarios are all examples in which pictures taken by a mobile phone are inserted into a document editing interface of a document editing application on a notebook computer (or a tablet computer). In a practical application, an object captured or generated by another electronic device may be inserted into any application of an electronic device that has a function of inserting an object (for example, a document, a video, audio, a picture, or handwriting). For example, audio, a picture, and a video captured by a mobile phone, a mobile phone screen recording, a document scanned by the mobile phone, handwriting, a copied text, an authored document, and the like are inserted into a notes application of a notebook computer; and audio, a picture, and a video captured by another mobile phone, a mobile phone screen recording, a document scanned by the mobile phone, handwriting, a copied text, an authored document, and the like are inserted into a notepad of one mobile phone.

An embodiment of this application provides a cross-device service calling method. One electronic device (for example, an electronic device A) may call a service (for example, a photographing service, a recording service, a screenshot service, a screen recording service, a scanning service, or a handwriting service) of another electronic device (for example, an electronic device B), so that the electronic device A can obtain an object captured or generated in real time by the called service in the electronic device B, where the object may include but is not limited to a document, a video, audio, a picture, handwriting, a text, and the like. The object may be inserted into any application of the electronic device A that has an object insertion function, or may not be inserted into any application of the electronic device A but is stored in storage space (for example, a magnetic disk) of the electronic device.

In addition, it should be noted that a physical channel for transmitting information exists between the electronic device B and the electronic device A. For example, the electronic device B and the electronic device A are directly connected via Wi-Fi, or the electronic device B and the electronic device A are located in a same local area network, or a connection is established between the electronic device B and the electronic device A via Bluetooth. Certainly, in a practical application, other forms of communication connections may also exist between the electronic device A and the electronic device B.

From a security perspective, the electronic device A may be further set to call only the electronic device B under a same account as the electronic device A. In this way, an electronic device of a user is prevented from being called by an electronic device of another user when there are multiple electronic devices in a same local area network. The electronic devices under the same account may be multiple electronic devices having an association relationship set by the user, and these electronic devices may belong to the same user; and the electronic devices under the same account may call each other.

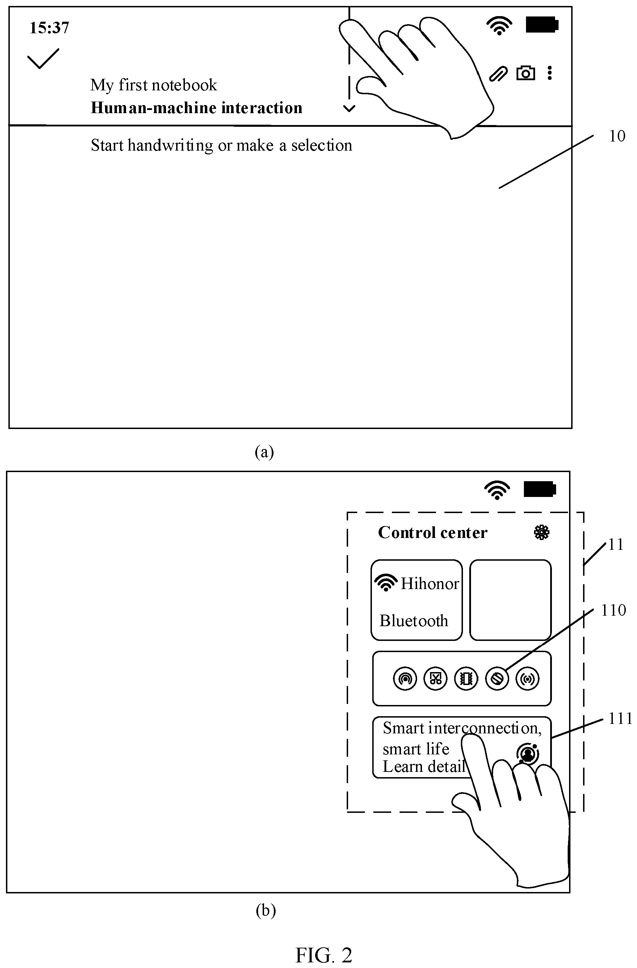

FIG. 2 to FIG. 8 are schematic diagrams of interfaces for cross-device service calling according to an embodiment of this application. The schematic diagrams of interfaces illustrate an example in which a tablet computer calls a photographing service of a mobile phone and inserts a photo taken through the photographing service of the mobile phone into a notes application on the tablet computer.

(a) in FIG. 2 is an editing interface 10 of a third-party notes application on the tablet computer. The notes application may be any application with a document editing function. A user may input a text, and insert audio, a document, a picture, a video, or the like into the editing interface 10. The editing interface 10 may be used as an example of a first interface.

The user inputs a downward swipe gesture in the editing interface shown in (a) in FIG. 2 (this operation is used as an example of a sixth operation). The swipe gesture is a swipe gesture starting from the top of a screen of the tablet computer. The swipe gesture may trigger the tablet computer to display a control center interface 11 shown in (b) in FIG. 2. The control center interface 11 is an interface for the user to quickly access commonly used applications and functions, such as an auto-rotation control 110 shown in the figure. Controls on the control center interface 11 for accessing other commonly used applications and functions are not exhaustively illustrated.

A smart interconnection card 111 is also displayed on the control center interface 11 shown in (b) in FIG. 2. The smart interconnection card 111 is used to quickly access a smart interconnection function provided by the tablet computer.

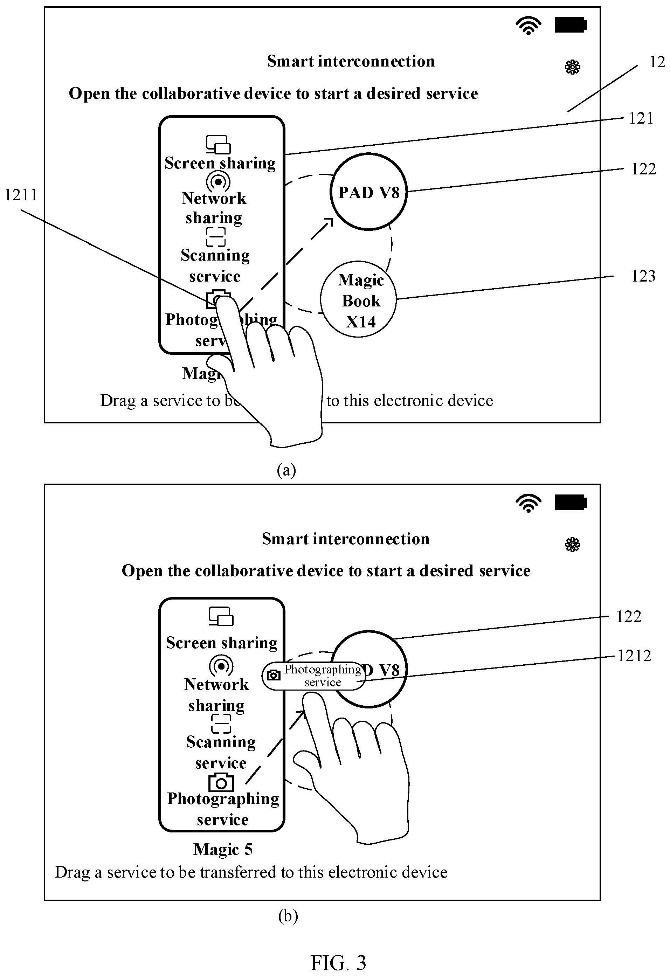

The user taps the smart interconnection card 111 on the control center interface 11 shown in (b) in FIG. 2, to trigger the tablet computer to display a smart interconnection interface 12 shown in (a) in FIG. 3 (which may be used as an example of a second interface). The user may call services of other electronic devices through the smart interconnection interface 12 on the tablet computer.

It may be understood that, by displaying the smart interconnection card in the control center, this embodiment of this application provides a simple and quick manner for entering the smart interconnection interface. In a specific implementation, because the display of the control center is independent of the interface currently displayed on the tablet computer, even if the tablet computer is displaying any other interface than the third-party notes application, the user can trigger the electronic device to display the control center interface through a downward swipe gesture, thereby entering the smart interconnection interface through the smart interconnection card on the control center interface.

It may be understood that, actually, the operation performed on the smart interconnection card may be denoted as a seventh operation. Alternatively, the sixth operation and the seventh operation may be collectively referred to as a first operation.

In another example, in a specific implementation, other quick gestures (for example, a circle gesture on the screen, and a swipe gesture starting from a corner of the screen) may also be used to trigger the tablet computer to enter the interface shown in (a) in FIG. 3 from any interface. Examples are not illustrated in this application.

As shown in (a) in FIG. 3, the smart interconnection interface 12 displays electronic devices that are under a same account as the tablet computer, such as a mobile phone Magic 5 and a notebook computer Magic Book X14. Certainly, this electronic device also needs to be displayed as a tablet computer Pad V8. In a practical application, an icon 122 of this electronic device is highlighted on the smart interconnection interface 12. For example, an icon of the tablet computer Pad V8 is highlighted.

An icon 123 of an electronic device that is under the same account as this electronic device and that currently has no physical channel connection to this electronic device is displayed in grayscale. For example, an icon of the notebook computer Magic Book 14 is displayed in grayscale. In a specific implementation, the notebook computer Magic Book 14 is under the same account as this electronic device, but is not currently in a same local area network as this electronic device, does not have a Wi-Fi direct connection, has not established a connection via Bluetooth, and has no other physical channel connection.

A service tab 121 provided by an electronic device that is under the same account as this electronic device and that currently has a communication connection to this electronic device (for example, in the same local area network) may be directly displayed, for example, a service tab 121 provided by the mobile phone Magic 5. The service tab 121 displays services that the mobile phone Magic 5 can provide: screen sharing, network sharing, a scanning service, and a photographing service. Certainly, a name of the mobile phone, Magic 5, may also be displayed below the service tab, along with an operation instruction: Drag a service to be transferred to this electronic device.

In another example, in a practical application, an icon of an electronic device that is under the same account as this electronic device and that currently has no physical channel connection to this electronic device may alternatively not be displayed.

This embodiment of this application provides a manner of calling a cross-device service through a drag gesture. In a practical application, a cross-device service may alternatively be called by tapping, and a corresponding operation instruction is: Tap to start the service to be transferred. Both the drag gesture and the tap operation may be used as examples of a second operation.

In this display manner, the user can quickly identify which device is this electronic device, which device is offline, and which cross-device service of which device can be used. The display manner is simple and easy to understand. On the other hand, an operation instruction may be provided to prompt the user how to call the cross-device service.

In another embodiment of this application, in a practical application, the display of the smart interconnection interface triggered by the operation shown in (b) in FIG. 2 may alternatively be: highlighting the icon of this electronic device and marking this electronic device as "this device", displaying in grayscale an icon of an electronic device that is under the same account as this electronic device and that currently has no communication connection to this electronic device, and highlighting an icon of an electronic device that is under the same account as this electronic device and that currently has a communication connection to this electronic device.

The user taps a highlighted icon of an electronic device that is under the same account as this electronic device and that currently has a communication connection to this electronic device, triggering display of a service tab of the electronic device whose icon is tapped, that is, the interface shown in (a) in FIG. 3 is displayed. The process is no longer illustrated in this application.

When the user wants to call the photographing service of the mobile phone Magic 5 by using the tablet computer Pad V8, the user may tap a control 1211 on the service tab 121, or the user may input a drag gesture on the screen from an area in which the control 1211 is located to an area in which the icon 122 of the tablet computer Pad V8 is located. The control 1211 corresponds to the photographing service of the mobile phone Magic 5.

The drag gesture may include three consecutive operations: a long-press selection operation, a drag operation, and a hand-lifting and release operation. After the tablet computer detects the long-press selection operation on the control 1211 (an example of a first control), the tablet computer displays a floating control 1212 (an example of a first floating control) in the area in which the control 1211 is located. After the tablet computer detects the drag operation after the long-press selection operation, the floating control 1212 is displayed along a trajectory of the drag operation, that is, the floating control 1212 is displayed following a drag trajectory of the user. Long-press duration of the long-press selection operation may be specifically set based on a situation.

(b) in FIG. 3 is a schematic diagram illustrating a process of the user dragging the floating control 1212. In a practical application, the floating control 1212 may be displayed in an area in which a touch point of the user's finger is located or in an area around a touch point. The floating control 1212 includes an icon of the corresponding photographing service and a text description "photographing service", where the text description is used to indicate that the currently selected service is the photographing service.

After the tablet computer detects the long-press selection of the control 1211, the floating control 1212 is displayed in the area in which the control 1211 is located, which may prompt the user that the photographing service of Magic 5 represented by the control 1211 has been selected and that the subsequent drag operation can be performed.

During dragging, the floating control 1212 is displayed in the area in which the touch point of the user's finger is located or in the area around the touch point, which may prompt the user that an object currently dragged is the photographing service corresponding to the floating control 1212.

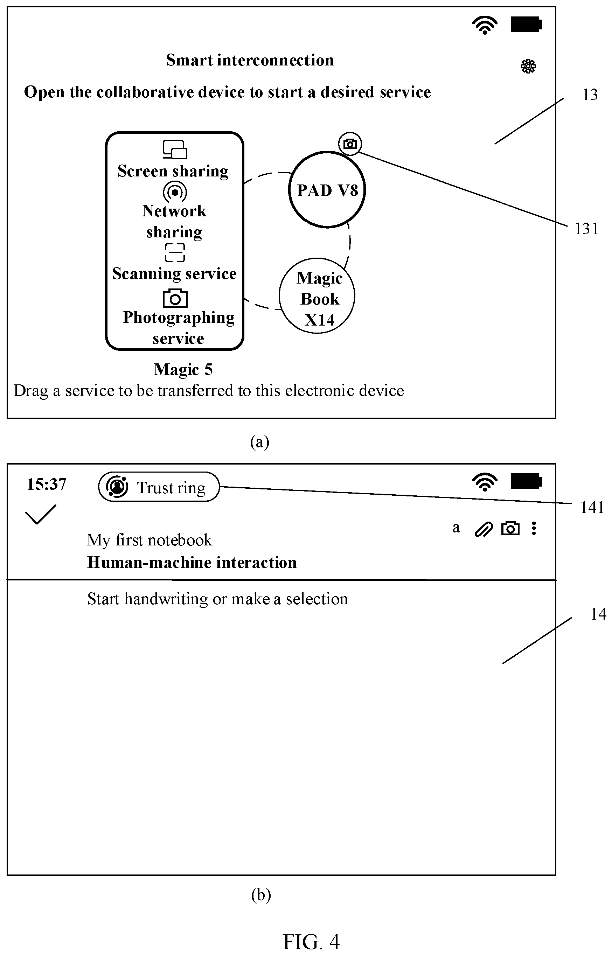

After the user drags the floating control 1212 to the area in which the icon 122 of this electronic device Pad V8 is located, the user lifts the finger, triggering the tablet computer to display an interface 13 shown in (a) in FIG. 4.

In a practical application, the control 1212 may alternatively not be displayed during dragging.

As shown in (a) in FIG. 4, after the tablet computer detects a hand-lifting and release operation after the touch point of the user's finger moves to the area in which the icon 122 of the Pad V8 is located (the release operation corresponds to a finger-lifting action of the user), a control 131 is displayed in an area around the icon 122 of the Pad V8, and the control 131 includes the icon of the photographing service.

Because the control 131 is displayed in the area around the icon 122 of the Pad V8 after the hand-lifting and release operation is detected, the user may be prompted that this electronic device Pad V8 starts to call a photographing service of another electronic device.

In a practical application, after detecting the hand-lifting and release operation after the touch point of the user's finger moves to the area in which the icon 122 of the Pad V8 is located, the tablet computer further needs to establish a cross-device call connection to the mobile phone Magic 5 in which the selected photographing service is located. The cross-device call connection is a communication connection established through a handshake protocol or in another manner based on a physical channel between this electronic device and the mobile phone Magic 5. After the call connection is successfully established, the electronic device displays an interface 14 shown in (b) in FIG. 4.

The interface 14 shown in (b) in FIG. 4 is similar to the interface 10 before the smart interconnection interface is displayed through the control center, that is, similar to the interface 10 shown in (a) in FIG. 2. A difference lies in that when the tablet computer displays the interface 14 shown in (b) in FIG. 4, the tablet computer has established a cross-device call connection to the mobile phone Magic 5. Therefore, a floating control 141 (an example of a second floating control) is displayed on a top status bar on the interface 14 shown in (b) in FIG. 4. The floating control 141 includes an icon of the smart interconnection function and a name "trust ring" of the smart interconnection function. In a practical application, the floating control 141 may alternatively be displayed at other positions on the screen. It should be noted that the name of the smart interconnection function may be specifically set based on a situation and that any text information in this embodiment of this application is merely an example.

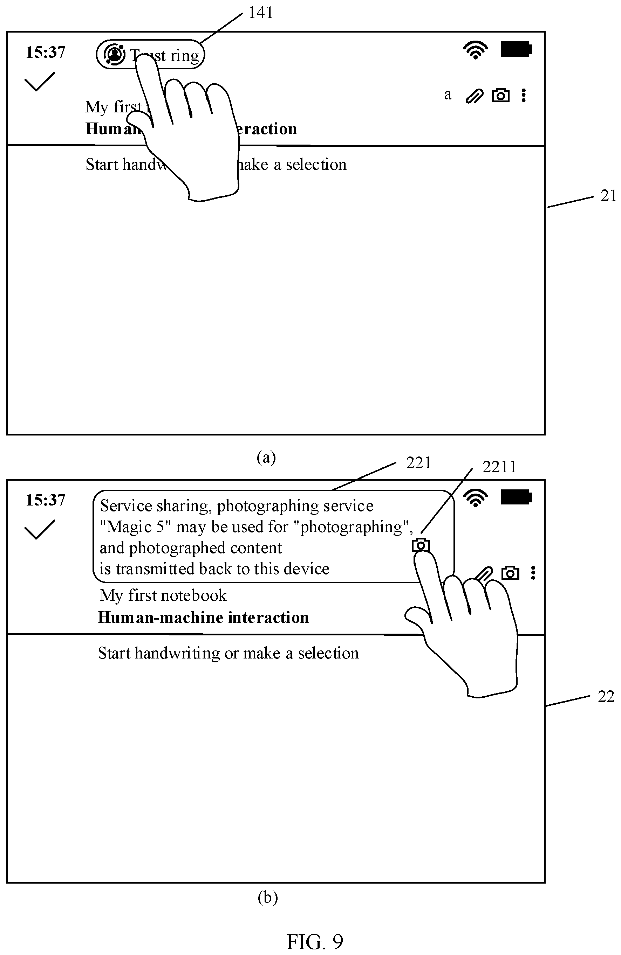

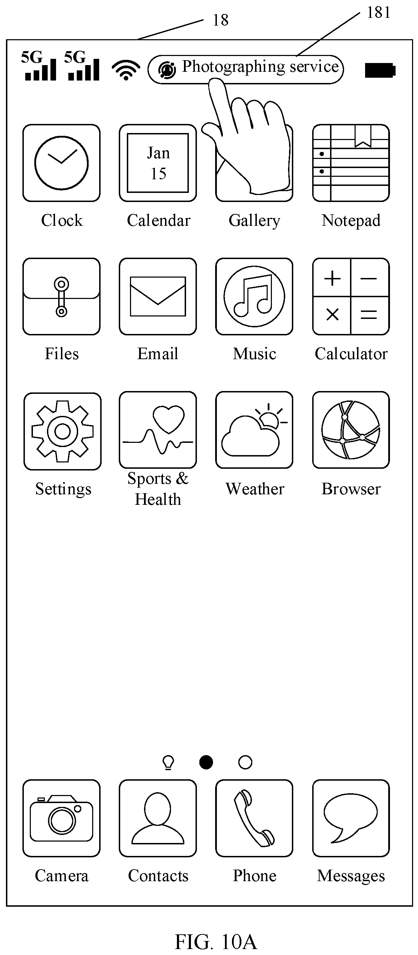

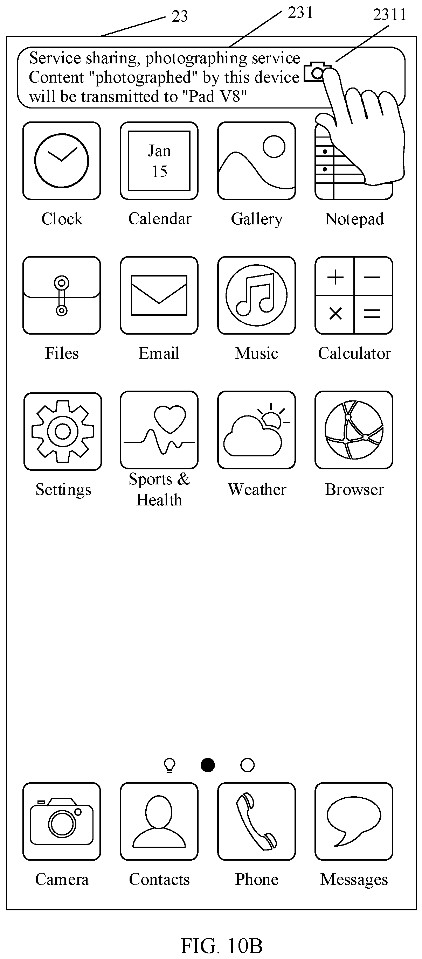

The floating control 141 may prompt the user that this electronic device has currently established a cross-device call connection to the other electronic device. Certainly, in a practical application, the floating control 141 may further implement other functions. For details, refer to subsequent FIG. 9, FIG. 10A, and FIG. 10B.

After establishing the cross-device call connection between the tablet computer and the mobile phone Magic 5, the tablet computer further needs to enable a camera function of the mobile phone Magic 5 through the cross-device call connection to call the photographing service of the mobile phone Magic 5. For example, the tablet computer sends a call instruction for the photographing service to the mobile phone Magic 5, where the call instruction can start a camera application of the mobile phone Magic 5. Correspondingly, after the camera application of the mobile phone Magic 5 is started, information indicating that the camera has been started may be returned to the tablet computer.

The corresponding instruction for establishing the cross-device call connection and calling the photographing service may be considered as a first instruction.

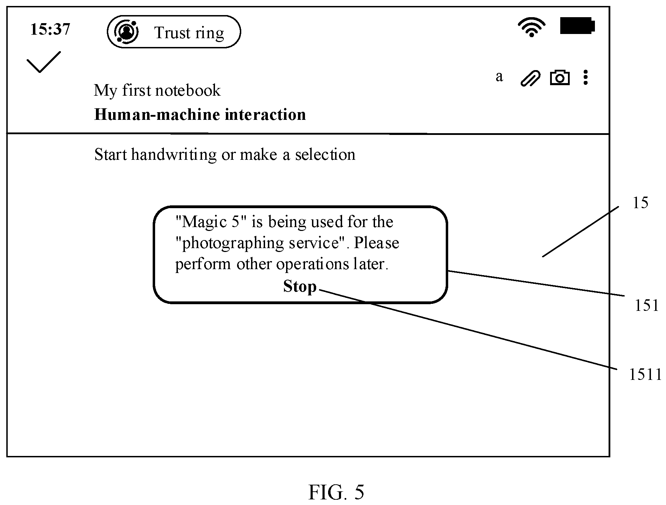

After receiving the information that is sent by the mobile phone Magic 5 and indicates that the camera application has been started, the tablet computer displays an interface 15 shown in FIG. 5. The interface 15 shown in FIG. 5 is an interface for displaying a blocking window based on the interface 14.

The interface 15 shown in FIG. 5 includes a blocking window 151, and the blocking window 151 includes prompt information: The electronic device of the user is using "Magic 15" for the "photographing service". Please perform other operations later. The blocking window 151 further includes a control 1511.

On one hand, the blocking window 151 is used to prompt the user that this electronic device has successfully called the photographing service provided by the camera application on the other electronic devices. On the other hand, the blocking window 151 is further used to prompt the user that this electronic device is currently calling the cross-device service of the other electronic device and that other operations currently performed on this electronic device may stop the current photographing service.

When the user wants to stop the current photographing service or the cross-device call connection, the user may tap the control 1511 in the blocking window 151. Therefore, the blocking window 151 further provides a function for stopping the current photographing service or the cross-device call connection.

In an example, after the tablet computer detects the tap operation on the control 1511, the tablet computer may stop calling the photographing service of the mobile phone Magic 5, but maintain the cross-device call connection between the tablet computer and the mobile phone Magic 5. The user may re-call the photographing service or other cross-device services of the mobile phone Magic 5 through the cross-device call connection between the tablet computer and the mobile phone Magic 5. When the cross-device call connection is not disconnected, the photographing service or other cross-device services of the mobile phone Magic 5 may be re-called. Refer to the subsequent description of FIG. 9.

In another example, after the tablet computer detects the tap operation on the control 1511, the cross-device call connection between the tablet computer and the mobile phone Magic 5 may be disconnected.

This is not limited in a specific implementation of this embodiment of this application.

In another example, because the time for establishing the cross-device call connection between this electronic device and the mobile phone Magic 5 and starting the camera in the mobile phone through the cross-device call connection is relatively short, in a practical application, a display time of the interface shown in (a) in FIG. 4 and (b) in FIG. 4 is relatively short. From a perspective of the user, the user may see the interface shown in FIG. 5 even without observing the display time of the interface shown in FIG. 4.

In addition, after the operation on the interface shown in (b) in FIG. 3, the tablet computer may alternatively no longer display the interfaces shown in FIG. 4 and FIG. 5, but directly displays the interface displayed before the interface corresponding to the smart interconnection function is displayed, for example, the interface shown in (a) in FIG. 2, or after waiting to receive a photo transmitted back by the photographing service of the mobile phone Magic 5, displays the interface displayed before the interface corresponding to the smart interconnection function is displayed, and displays a thumbnail of the photo on this interface. This is not limited in a specific implementation of this embodiment of this application.

As described above, the camera application of the mobile phone Magic 5 has been started. After the camera application of the mobile phone Magic 5 is started, the mobile phone Magic 5 displays an interface 16 corresponding to the photographing service called across devices. This interface is used as an example of a third interface.

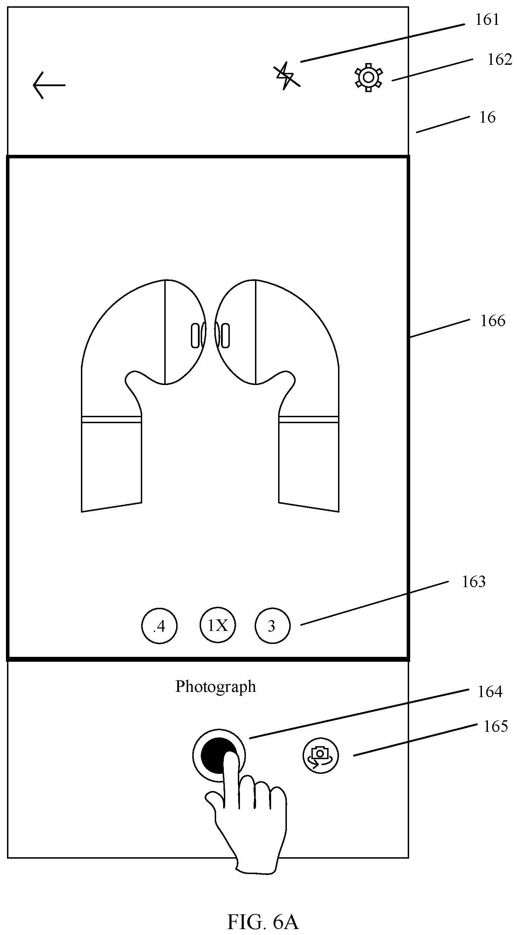

FIG. 6A shows an example of the interface 16 corresponding to the photographing service provided in an embodiment of this application. The interface 16 includes some controls related to photographing, for example, a flash control 161 for enabling or disabling a flash function, a settings control 162 for setting parameters related to photographing (for example, a shooting ratio and a shutter speed), a focal length control 163 for setting a focal length for photographing, a photographing control 164 (this control is used as an example of a second control) for taking photos and generating photos, and a camera switching area 165 for switching between a front camera and a rear camera. The interface 16 further includes a preview area 166, and the preview area 166 is used to display a preview picture captured by the camera.

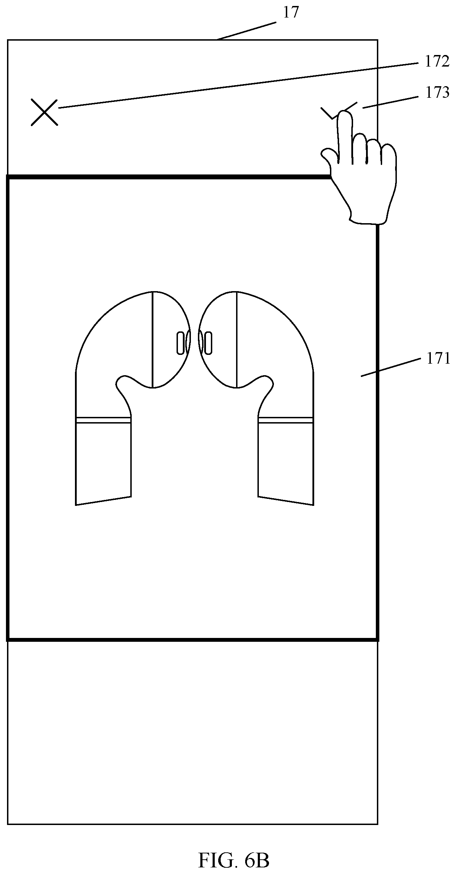

After the user taps the photographing control 164 on the interface 16, the mobile phone displays, in response to the tap operation (an example of an eighteenth operation) on the photographing control 164, a confirmation interface 17 shown in FIG. 6B.

The confirmation interface 17 displays a photo 171 obtained through photographing, and further includes a cancel control 172 and a confirm control 173 (an example of a ninth control). The cancel control 172 is used to delete the photo 171 and return to a photographing interface to take a photo again. The confirm control 173 is used to confirm transmission of the photo 171 to the tablet computer.

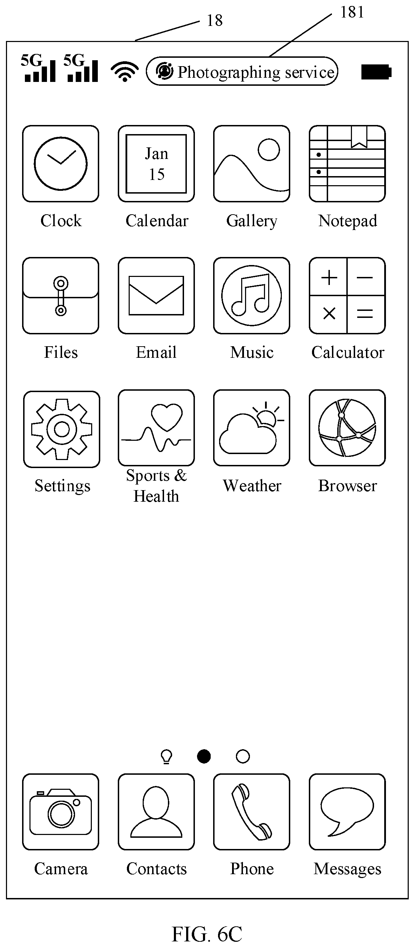

When the user determines to transmit the photo 171 to the tablet computer Pad V8 that calls the mobile phone Magic 5, the user taps the confirm control 173. After the mobile phone Magic 5 receives the tap operation on the confirm control 173 (an example of a nineteenth operation), the photo 171 is transmitted to the tablet computer Pad V8. In addition, the mobile phone Magic 5 displays an interface 18 shown in FIG. 6C. Certainly, the eighteenth operation and the nineteenth operation may be collectively referred to as a third operation.

If the mobile phone Magic 5 displays a system desktop before the photographing service is called and the interface 16 shown in FIG. 6A is displayed, the electronic device displays the system desktop in response to the tap operation on the confirm control 173.

If the mobile phone Magic 5 displays another interface before the photographing service is called and the interface 16 shown in FIG. 6A is displayed, the electronic device displays the other interface in response to the tap operation on the confirm control 173.

If the mobile phone Magic 5 is in a screen-off state before the photographing service is called and the interface 16 shown in FIG. 6A is displayed, the electronic device displays the system desktop in response to the tap operation on the confirm control 173.

Certainly, in a practical application, it is also possible to specify that regardless of whether the mobile phone Magic 5 displays any interface or is in the screen-off state before the photographing service is called, the electronic device displays the system desktop in response to the tap operation on the confirm control 173.

This is not limited in a specific implementation of this embodiment of this application.

In this embodiment of this application, the system desktop is displayed as an example in FIG. 6C (an example of an eleventh interface), and a floating control 181 (an example of a third floating control) is also displayed on a status bar of the system desktop, where the floating control 181 displays the icon of the smart interconnection function and a text prompt "photographing service" of the currently called photographing service. Certainly, the floating control 181 may alternatively be displayed at other positions on the system desktop.

The floating control 181 is used to prompt the user that the photographing service of this electronic device (mobile phone Magic 5) is currently being called by another electronic device. The floating control 141 may further implement other functions. For details, refer to subsequent FIG. 10A and FIG. 10B.

In another embodiment of this application, when the mobile phone Magic 5 displays the interface in FIG. 6A, after receiving the operation on the photographing control 164, the mobile phone Magic 5 directly transmits the generated photo to the tablet computer side and displays the interface shown in FIG. 6B, that is, there is no interface 17 for confirmation.

In still another embodiment of this application, while the tablet computer displays the interface 15 shown in FIG. 5, the user may tap the control 1511 in the blocking window 151 on the interface 15 to trigger the tablet computer to cancel the call of the photographing service of the mobile phone.

In a practical application, after the cross-device call connection is established between the tablet computer and the mobile phone, when at least one call has been completed through the cross-device call connection to transmit the photo back, and the tablet computer re-calls the photographing service of the mobile phone through the cross-device call connection to take a photo, the tablet computer continues to display the blocking window. After the tablet computer receives the tap operation on the control 1511 in the blocking window, the tablet compute cancels this call, but does not disconnect the cross-device call connection between the tablet computer and the mobile phone.

When a complete call (that is, back transmission of a photo) has not been completed through the cross-device call connection, the tablet computer disconnects the cross-device call connection between the tablet computer and the mobile phone after receiving the tap operation on the control 1511 in the blocking window while the tablet computer displays the blocking window. A reason may be that establishment of the cross-device call connection between the tablet computer and the mobile phone and start of the photographing service on the mobile phone in this scenario are usually caused by an unintentional user operation.

While the photographing interface (for example, the interface 16 and the interface 17 in FIG. 6A and FIG. 6B) is displayed on the mobile phone side, if the user taps the control 1511 in the blocking window on the tablet computer, the mobile phone side closes the photographing interface and displays the interface displayed before the photographing interface. When the interface displayed before the photographing interface is displayed, whether the floating control 181 is displayed on the status bar of the interface is related to whether the cross-device call connection between the tablet computer and the mobile phone is disconnected. For example, when the tap operation on the control 1511 triggers the disconnection of the cross-device call connection between the tablet computer and the mobile phone, the floating control 181 is no longer displayed on the status bar on the mobile phone side; or when the tap operation on the control 1511 triggers the cancellation of the current call between the tablet computer and the mobile phone, but the cross-device call connection is not disconnected, the floating control 181 is displayed on the status bar on the mobile phone side.

Certainly, while the interface (for example, the interface 18 in FIG. 6C) is displayed after the mobile phone side completes photographing and transmits the photo back, although the blocking window on the tablet computer side is no longer displayed, when the cross-device call connection between the tablet computer and the mobile phone side is disconnected, the floating control 181 displayed on the status bar of the interface 18 also disappears.

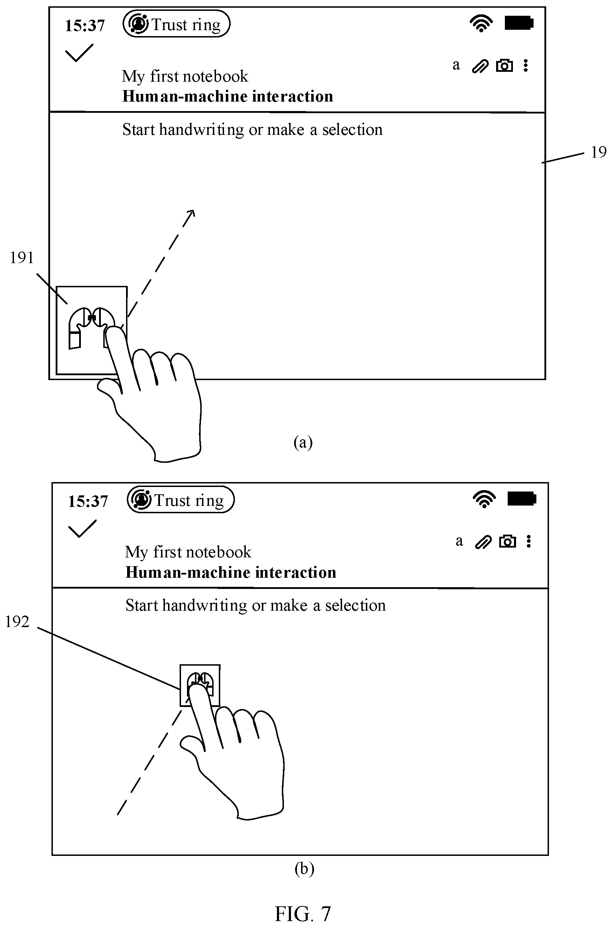

For a schematic diagram of the interface on the tablet computer after the mobile phone Magic 5 transmits the photo 171 obtained through photographing (an example of a first object) to the tablet computer Pad V8, refer to an interface 19 shown in (a) in FIG. 7.

With reference to the interface 19 shown in (a) in FIG. 7, based on the interface 15 shown in FIG. 5, the blocking window 151 disappears, and a thumbnail 191 of the photo 171 obtained by calling the photographing service of the mobile phone Magic 5 is displayed in a lower left corner of the screen.

The user may input a drag gesture from an area in which the thumbnail 191 (an example of an identifier of the first object) is located to an editing area of the third-party notes application on the screen, thereby inserting the photo 171 into the editing area of the third-party notes application.

As described above, the drag gesture may include three consecutive operations: a long-press selection operation, a drag operation, and a hand-lifting and release operation. After the tablet computer detects the long-press selection operation on the thumbnail 191, the thumbnail 191 is switched to a floating control 192. After the tablet computer detects the drag operation after the long-press selection operation, the floating control 192 is displayed along a trajectory of the drag operation, that is, the floating control 192 is displayed following a drag trajectory of the user.

(b) in FIG. 7 is a schematic diagram illustrating a process of the user dragging the floating control 192. In a practical application, the floating control 192 may be displayed in an area in which a touch point of the user's finger is located. A thumbnail of the photo 171 is displayed in the floating control 192, and a size of the thumbnail displayed in the floating control 192 may be less than a size of the thumbnail 191. Alternatively, a size of the thumbnail displayed in the floating control 192 may be greater than a size of the thumbnail 191. In addition, the thumbnail in the floating control 192 or the thumbnail 191 may include part or all of content in the photo 171.

After the tablet computer detects the long-press selection of the thumbnail 191, the thumbnail 191 is switched to the floating control 192, which may prompt the user that the thumbnail 191 has been selected and that the subsequent drag operation can be performed.

During dragging, the floating control 192 is displayed in the area in which the touch point of the user's finger is located, which may prompt the user that an object currently dragged is the photo 171 corresponding to the floating control 192.

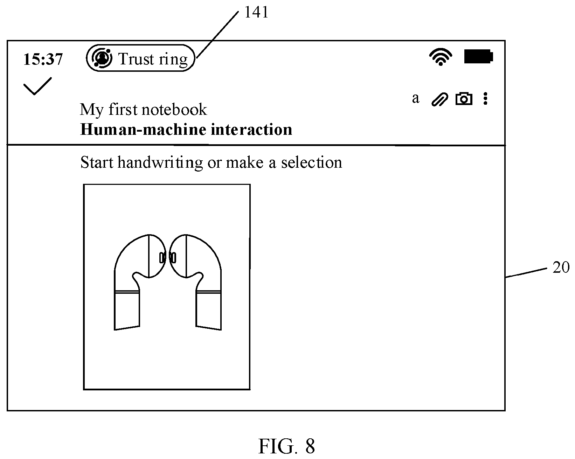

After the user drags the floating control 192 to the editing area of the third-party notes application, the user lifts the finger, triggering the tablet computer to display an interface 20 shown in FIG. 8.

As shown in FIG. 8, the photo 171 has been inserted into the editing area of the third-party notes application.

A process of using the tablet computer to call the photographing service of the mobile phone for photographing, and inserting the photo obtained through photographing into the notes application on the tablet computer is described with reference to FIG. 2 to FIG. 8 in this embodiment of this application. In this process, the cross-device call is initiated through the control center of the tablet computer and is not limited to a specific application. Moreover, the entire process is simple and efficient.

In another example, based on the interface shown in (a) in FIG. 7, the user may close the current notes application (which may be denoted as a first application) and restart another second application having a photo insertion function. For example, the user may start the second application by returning to the system desktop and tapping an icon of the second application, so that the tablet computer displays an editing window of the second application. The foregoing operation is an example of a fourth operation. Certainly, when the tablet computer displays the system desktop and the editing window of the second application, the thumbnail of the photo is also displayed in a floating manner on the display. This interface is used as an example of a fourth interface. The user may drag the thumbnail of the photo into an editing area of the editing window of the second application to insert the photo into the editing area of the second application.

Certainly, the system desktop may also be understood as an application. Therefore, the interface shown in (a) in FIG. 7 may alternatively be a corresponding interface when the thumbnail of the photo is displayed on the system desktop. Correspondingly, the user triggers the electronic device to display the control center by performing a pull-down operation on the interface corresponding to the system desktop.

Certainly, in a practical application, when different services of a same electronic device are called again or services of different electronic devices are called, a similar manner may also be used. However, because performed operations and interfaces occur at different times, they are distinguished by using first, second, and N^{th}. Persons skilled in the art may directly and unambiguously determine the cross-device call process with reference to the accompanying drawings and text content. Therefore, detailed descriptions of each operation, each interface, each control, or each window are not provided again.

After the photo taken through the photographing service of the mobile phone is inserted into the notes application on the tablet computer, the cross-device call connection between the tablet computer and the mobile phone is not disconnected. When the cross-device call connection between the tablet computer and the mobile phone is not disconnected, the icon of the smart interconnection function is displayed on the status bar of the mobile phone. For details, refer to the floating control 181 displayed in a status bar area of the system desktop of the mobile phone shown in FIG. 6C. The icon of the smart interconnection function is displayed on a status bar page of the tablet computer. For details, refer to the floating control 141 displayed in a status bar area of the interface 20 shown in FIG. 8.

It should be noted that the cross-device call connection between the tablet computer and the mobile phone may be kept alive for a period of time, for example, 1 minute, 3 minutes, 5 minutes, or 10 minutes. Specific keep-alive duration may be set based on an actual situation.

A start time of the keep-alive duration may be a time when the cross-device call connection between the tablet computer and the mobile phone is successfully established most recently, or a time when the camera application corresponding to the photographing service on the mobile phone is started, or a time when information (for example, the photo obtained through photographing) is last transmitted through the cross-device call connection between the tablet computer and the mobile phone.

While the cross-device call connection between the tablet computer and the mobile phone is kept alive, by using the floating control 141 displayed on the status bar of the tablet computer or the floating control 181 displayed on the status of the mobile phone, the user may enable the tablet computer to re-call the photographing service of the mobile phone to perform a photographing process.

First, an example in which the re-call of the photographing service of the mobile phone is triggered by the tablet computer is used for description.

Refer to an interface 21 shown in (a) in FIG. 9. The interface 21 may be the interface 20 after the photo 171 is inserted as shown in FIG. 8, or may be any interface with the floating control 141 on the status bar. In an example, the user considers that the photo 171 does not meet a requirement, and deletes the photo 171 inserted into the interface 20, where the interface 20 after the photo 171 is deleted is the interface 21. Certainly, the interface may alternatively be the system desktop displayed on the tablet computer, triggered by a gesture operation. Alternatively, the interface 21 may be an interface of another application on the tablet computer.

The user taps the floating control 141 on the interface 21 to view the other electronic device that is currently called and the service called across devices.

In response to the tap operation on the floating control 141, the tablet computer displays an interface 22 shown in (b) in FIG. 9. In the interface 22, a floating window 221 is displayed at the top of the screen. The floating window 221 includes prompt information: "Magic 5" may be used for "photographing", and photographed content is transmitted back to this device. Therefore, the floating window 221 is used to prompt the user that the electronic device currently calls the photographing service of Magic 5.

The floating window 221 further includes a control 2211. The user taps the control 2211 to trigger the tablet computer to re-call the photographing service of the mobile phone Magic 5 to take a photo.

In an example, after the tablet computer detects the tap operation on the control 2211, the tablet computer further needs to enable the camera function of the mobile phone Magic 5 through the cross-device call connection to call the photographing service of the mobile phone Magic 5. For example, similar to the foregoing embodiment, the tablet computer sends a call instruction for the photographing service to the mobile phone Magic 5, where the call instruction can start the camera application of the mobile phone Magic 5; and correspondingly, after the camera application of the mobile phone Magic 5 is started, information indicating that the camera has been started may be returned to the tablet computer. After receiving the information that is sent by the mobile phone Magic 5 and indicates that the camera application has been started, the tablet computer displays a blocking window.

For an interface on which the tablet computer displays the blocking window, refer to the interface 15 shown in FIG. 5.

After the camera application of the mobile phone is successfully started, an interface for performing the photographing process on the mobile phone side may be shown in FIG. 6A to FIG. 6C. Interfaces after the photo obtained through photographing on the mobile phone side is transmitted back to the tablet computer side may be shown in FIG. 7 and FIG. 8. In other words, the user sequentially performs operations based on the interfaces shown in FIG. 9, FIG. 6A to FIG. 6C, FIG. 7, and FIG. 8 to implement the following: calling the photographing service of the mobile phone on the tablet computer side to obtain a photo, and inserting the obtained photo into the editing area after the photo is transmitted back to the tablet computer. Certainly, the photo transmitted back in this case is different from the photo 171.

In another example, in a practical application, after the operation shown in (a) in FIG. 9, the tablet computer may alternatively directly enable the camera function of the mobile phone Magic 5 through the cross-device call connection to call the photographing service of the mobile phone Magic 5, and there is no need to continue to display the floating window 221 shown in (b) in FIG. 9.

The process of triggering the tablet computer to re-call the photographing service on the mobile phone side by using the floating control 141 as shown in FIG. 9 is simpler and more efficient. The corresponding operations in FIG. 9 may be a tenth operation and an eleventh operation (the two operations may be collectively referred to as a ninth operation). Similarly, the ninth operation may be used to trigger the tablet computer to re-call the photographing service of the mobile phone. The window 221 may be used as an example of a first floating window. The control 2211 may be used as an example of a fourth control. Instructions for re-calling the photographing service may also be denoted as a second instruction, a third instruction, even an N^{th} instruction, or the like.

In a practical application, if the tablet computer calls the photographing service of the mobile phone, the user further wants to continue to call other services of the mobile phone through the tablet computer, such as the scanning service; while the tablet computer displays the blocking window, the user first needs to tap the control 1511 in the blocking window to interrupt the current call process and maintain the cross-device call connection between the tablet computer and the mobile phone, or directly disconnect the cross-device call connection between the tablet computer and the mobile phone; and then the user re-calls the scanning service of the mobile phone through the control center, for example, performs the operations in FIG. 2 and FIG. 3 to trigger the tablet computer to re-call the scanning service of the mobile phone. Certainly, an object of the operations in FIG. 2 and FIG. 3 is no longer the photographing service, but the scanning service. If the previous cross-device call connection has been disconnected, a cross-device call connection needs to be reestablished between the tablet computer and the mobile phone, and then a scanning service call is initiated through the cross-device call connection. If the previous cross-device call connection has not been disconnected, a scanning service call may be initiated through the established cross-device call connection.

Certainly, one cross-device service may implement one or more functions. For example, the photographing service may implement photographing. In a practical application, recording may also be implemented. Correspondingly, controls related to recording need to be set on the photographing interface on the mobile phone side. Similarly, the scanning service may implement one or more functions. For example, the scanning service may implement a function of scanning a paper document to obtain a text in the paper document. The scanning service may also implement a function of scanning a paper document to obtain a PDF file corresponding to the paper document. Correspondingly, controls corresponding to various functions need to be set on the interface corresponding to the scanning service on the mobile phone side. The scanning service is used as an example of a second service. The related operations and interfaces are not described again. For details, refer to the foregoing descriptions.

In another embodiment of this application, if the tablet computer has called the photographing service of the mobile phone Magic 5, the user further wants to continue to call a cross-device service of a mobile phone Magic 4 through the tablet computer. While the tablet computer displays the blocking window, the cross-device service of the other mobile phone Magic 4 cannot be called through the control center. Instead, it is necessary to first tap the control 1511 in the blocking window to trigger the electronic device to cancel the call of the photographing service of the mobile phone Magic 5, and then call the cross-device service of the other mobile phone Magic 4 through the control center. While the tablet computer does not display the blocking window, the cross-device service of the other mobile phone Magic 4 can be called through the control center. For example, the operations shown in FIG. 2 and FIG. 3 are performed to trigger the tablet computer to re-call the photographing service or a scanning service of the mobile phone Magic 4. Magic 4 is used as an example of a third electronic device. For the process of calling the third electronic device, refer to the process of calling the second electronic device. Each interface, each operation, even each window, and a name of each control are not distinguished or described again. In a practical application, the naming is performed in an order of first, second, and N^{th}.

The following describes an example in which the photographing service of the mobile phone, after being triggered by the mobile phone, is re-called by the tablet computer.

As shown in FIG. 10A, the interface may be the interface 18 shown in FIG. 6C. A status bar of the interface 18 includes a floating control 181. Certainly, the interface may alternatively be any interface in which a status bar includes a floating control 181. Certainly, the interface may alternatively be any interface in which a floating control 181 is displayed on a status bar.

In an example, the interface may alternatively be an interface of a calendar application after the user taps a calendar icon on the system desktop, or may be an interface of a notepad application after the user taps a notepad icon.

The user taps (an example of a twenty-first operation) the floating control 181 (an example of the third floating control) on the interface 18 to check which electronic device has called the photographing service of this electronic device (mobile phone Magic 5).

In response to the tap operation on the floating control 181, the mobile phone displays an interface 23 shown in FIG. 10B. In the interface 23, a floating window 231 (an example of a fifth window) is displayed at the top of the screen. The floating window 231 includes prompt information: Content "photographed" by this device will be transmitted to "pad V8". Therefore, the floating window 231 is used to prompt the user that the photographing service of this electronic device is called by the tablet computer Pad V8 and that a photo obtained through photographing will be transmitted to the tablet computer Pad V8.

The floating window 231 further includes a control 2311. The user taps (an example of a twenty-second operation) the control 2311 (an example of a tenth control) to trigger the tablet computer to re-call the photographing service of the mobile phone Magic 5 to take a photo.

In an example, after the mobile phone detects the tap operation on the control 2311, the mobile phone starts the camera application of this electronic device. After the camera application of the mobile phone is started, the mobile phone may send information indicating that the camera has been started to the tablet computer. In addition, the mobile phone displays a photographing service interface (also referred to as a thirteenth interface). For the photographing service interface, refer to the interface 16 shown in FIG. 6A.

In another example, when the mobile phone Magic 5 displays an interface shown in FIG. 10A, if a tap operation on the floating control 181 is received, the mobile phone directly starts the camera application on this electronic device, and there is no need to display FIG. 10B to start the camera application on this electronic device by using the floating window 231 shown in FIG. 10B.

After receiving the information sent by the mobile phone indicating that the camera application has been started, the tablet computer displays a blocking window on the interface currently displayed by the tablet computer. For the blocking window, refer to 151 shown in FIG. 5.

After the tablet computer displays the blocking window 151 and the mobile phone displays the photographing service interface 16, it indicates that the tablet computer has successfully called the photographing service of the mobile phone. For an interface on which the user subsequently performs a photographing process, refer to FIG. 6A to FIG. 6C. For an interface after the photo obtained through photographing on the mobile phone side is transmitted back to the tablet computer side, refer to FIG. 7 and FIG. 8.

The process of triggering the tablet computer to re-call the photographing service on the mobile phone side by using the floating control 181 as shown in FIG. 10A is also simple and efficient.

All the foregoing embodiments are described by using an example in which the tablet computer pad V8 calls the photographing service of the mobile phone Magic 5. In a practical application, a model of the tablet computer is not limited to "pad V8" in the foregoing example, and a model of the mobile phone is not limited to "Magic 5" in the foregoing example. The photographing service is merely an example of a cross-device service. Certainly, the tablet computer calling the mobile phone is merely an example of one electronic device calling a cross-device service of another electronic device. In a practical application, any electronic device may call any cross-device service of another electronic device.

The following embodiments of this application are described by using an example in which a computer (for example, a notebook computer) calls a photographing service of a mobile phone. In this example, insertion of a received photo into an editing interface provided by any application is no longer used as an example.

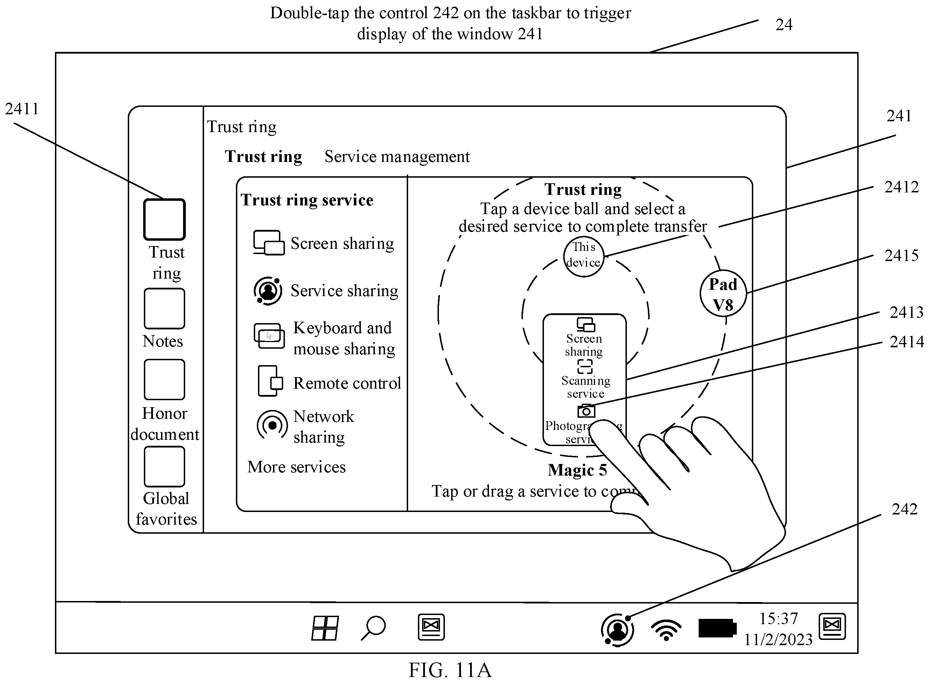

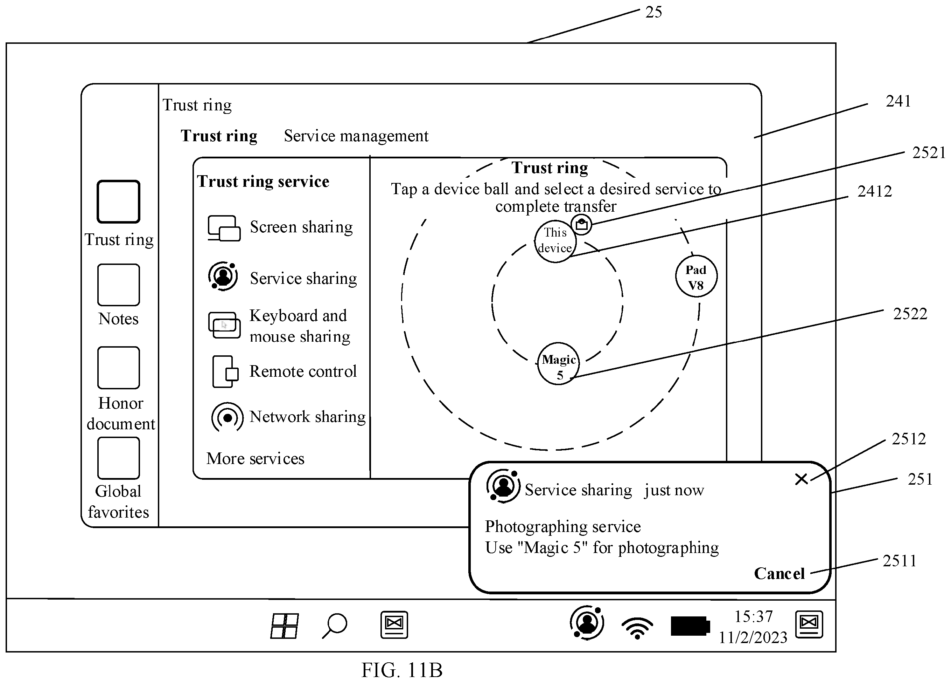

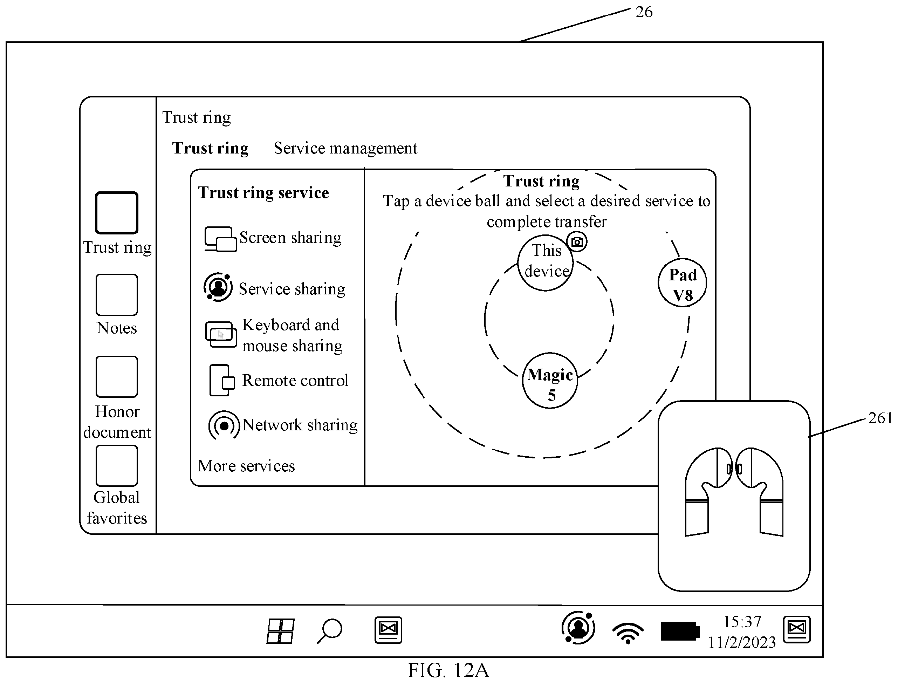

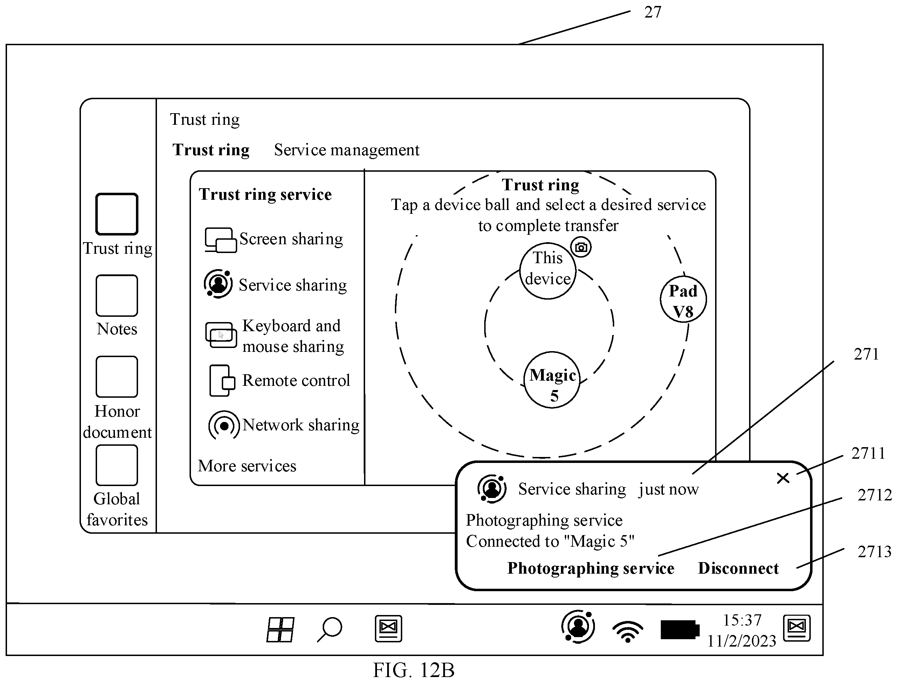

FIG. 11A, FIG. 11B, FIG. 12A, and FIG. 12B are schematic diagrams of interfaces for cross-device service calling according to an embodiment of this application.

FIG. 11A shows an interface 24 displayed on a computer. The interface 24 includes a user management window 241. A name of the user management window 241 is not limited. For example, this window may also be referred to as an Honor super workbench.

In a specific implementation, when the computer displays any interface, a user may double-tap (an example of a first operation) a control 242 (an example of a first icon) on a taskbar to trigger the electronic device to display the user management window 241. In a practical application, the double-tap operation is merely an example, and the control 242 on the taskbar is merely an example of an entry to the user management window 241. In a practical application, the user management window 241 may also be entered through another entry.

A plurality of tabs are displayed in the user management window 241: a trust ring tab 2411, a notes tab, an Honor document tab, and a global favorites tab.

A tab selected by default in the user management window 241 may be a first tab in the column of tabs. Content corresponding to the selected tab is displayed on the right side of the user management window 241.

In an example, when the trust ring tab 2411 is selected, content related to the trust ring, that is, a smart interconnection function provided in an embodiment of this application, is displayed on the right side of the user management window 241.

The smart interconnection function corresponding to this trust ring may include a plurality of cross-device services, such as screen sharing, service sharing, keyboard and mouse sharing, remote control, and network sharing. Certainly, the smart interconnection function further includes a service call in this embodiment of this application.

When the trust ring tab 2411 is selected, an electronic device that is under a same account as this notebook computer, for example, a mobile phone Magic 5, is displayed on the right side of the user management window 241. Certainly, this electronic device also needs to be displayed.

As shown in the figure, an icon of this electronic device is displayed, and "this device" is displayed in the icon, to prompt, by using the characters "this device", that the icon corresponds to this electronic device.

In another example, a type and model of this electronic device may also be displayed in the icon of this electronic device according to the foregoing tablet computer example. For example, Magic Book 14 may also be displayed.

A specific manner of displaying the icon of this electronic device is not limited in this embodiment of this application.

In a practical application, the icon 2412 of this electronic device is highlighted in the user management window 241. The icon 2412 of this electronic device may be displayed on an inner ring.

An icon of an electronic device that is under the same account as this electronic device and that currently has no communication connection to this electronic device may be displayed in grayscale. For example, an icon of a tablet computer Pad V8 is displayed in grayscale, and an icon of an electronic device that is under the same account as this electronic device and that currently has no communication connection to this electronic device may be displayed on a ring different from the ring on which the icon of this electronic device is displayed. For example, it is displayed on an outer ring.

A service tab of an electronic device that is under the same account as this electronic device and that is currently in a same network as this electronic device may be directly displayed, for example, a service tab 2413 of the mobile phone Magic 5. The service tab 2413 displays services that the mobile phone Magic 5 can provide: screen sharing, a scanning service, and a photographing service. Certainly, a name of the mobile phone, Magic 5, may also be displayed below the service tab, along with an operation instruction: Tap or drag a service to complete transfer. Because the mobile phone Magic 5 and this electronic device are in the same network, the service tab of the mobile phone Magic 5 may be displayed on the same inner ring as the notebook computer.

In this display manner, the user can quickly identify which device is this electronic device, which device is offline, and which cross-device service of which device can be used. The display manner is simple and easy to understand. On the other hand, an operation instruction may be provided to prompt the user how to call the cross-device service.

A manner of displaying various types of electronic devices on this interface is merely an example and does not constitute any limitation.

When the user wants to call the photographing service of the mobile phone Magic 5 by using this electronic device, the user may tap a control 2414 on the service tab 2413, or the user may input a drag gesture on a screen from an area in which the control 2414 is located to an area in which the icon 2412 of this electronic device is located. The control 2414 corresponds to the photographing service of the mobile phone Magic 5.

In this embodiment of this application, a tap gesture is used as an example. After the user taps the control 2414, the notebook computer establishes a cross-device call connection to the mobile phone Magic 5 in response to the tap operation on the control 2414, and sends a call instruction to the mobile phone Magic 5 based on the cross-device call connection, where the call instruction can start a camera application on the mobile phone Magic 5. Correspondingly, after the camera application of the mobile phone Magic 5 is started, information indicating that the camera has been started may be returned to the notebook computer.

After receiving the information that is sent by the mobile phone Magic 5 and indicates that the camera has been started, the notebook computer displays an interface 25 shown in FIG. 11B.

The user management window 241 is displayed in both the interface 25 shown in FIG. 11B and the interface 24 shown in FIG. 11A. However, content displayed in the user management window 241 changes.

As shown in FIG. 11B, the service tab of the mobile phone Magic 5 is updated to an icon 2522 of the mobile phone Magic 5. The icon 2522 may also be displayed in grayscale. The icon 2522 of the electronic device that is in the same network as this device is displayed on the inner ring on which this device is located; and an icon 2415 of an electronic device that is not in the same network as this device is displayed on the outer ring. In this way, it is also possible to quickly distinguish which electronic device is located in the same network as this electronic device and which electronic device is not located in the same network as this electronic device.

A control 2521 is displayed in an area near the icon 2412 of this electronic device, and the control 2521 indicates that this electronic device has successfully called a cross-device service.

In the interface 25 shown in FIG. 11B, a service window 251 (an example of a first window) is also displayed. The service window 251 includes prompt information: Use "Magic 5" to take a photo. The service window 251 further includes a control 2511.

On one hand, the service window 251 is used to prompt the user that the electronic device has successfully called the photographing service provided by the camera application on the other electronic device. On the other hand, the service window 251 is further used to prompt the user that this electronic device is currently calling the photographing service of the other electronic device. The service window 251 includes the control 2511 and a control 2522. The control 2511 is used to perform a function of stopping the current photographing service or the cross-device call connection. The control 2522 is used to close the service window 251.

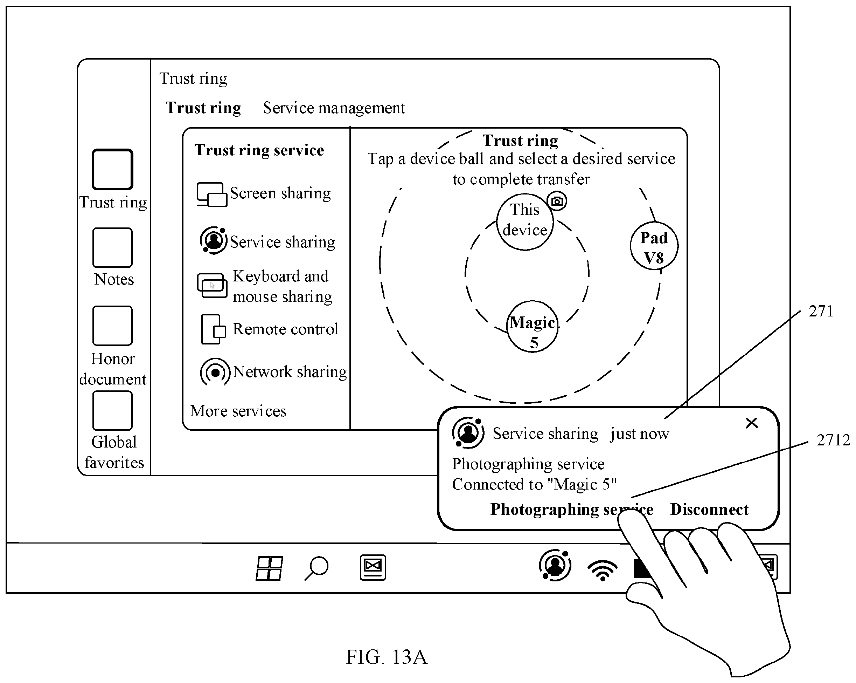

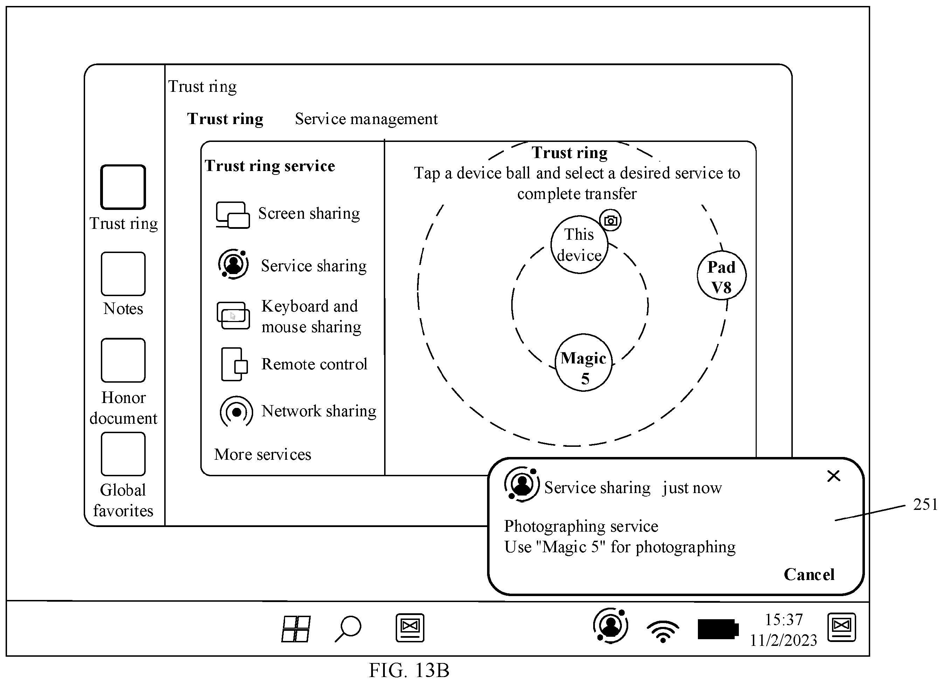

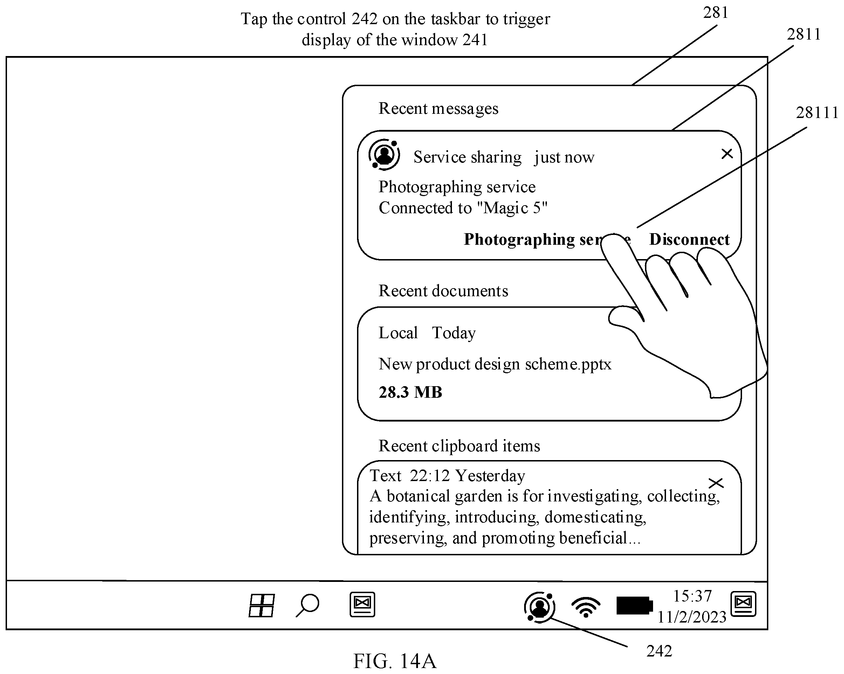

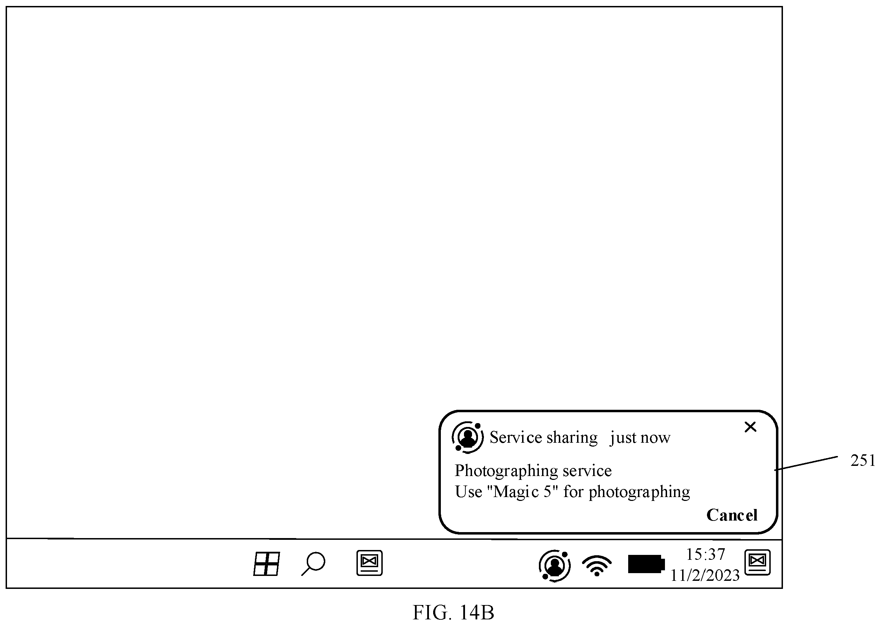

In an example, after the notebook computer detects a tap operation on the control 2511, the notebook computer may stop calling the photographing service of the mobile phone Magic 5, but maintain the cross-device call connection between the notebook computer and the mobile phone Magic 5. The user may re-call the photographing service or other cross-device services of the mobile phone Magic 5 through the cross-device call connection between the notebook computer and the mobile phone Magic 5. When the cross-device call connection is not disconnected, the photographing service of the mobile phone Magic 5 may be re-called. Refer to subsequent descriptions of FIG. 13A, FIG. 13B, FIG. 14A, and FIG. 14B.

In another example, after the notebook computer detects the tap operation on the control 2511, the cross-device call connection between the notebook computer and the mobile phone Magic 5 may be disconnected.

This is not limited in a specific implementation of this embodiment of this application.

In another example, after detecting the tap operation on the control 2512, the notebook computer may close the service window.

As described above, the camera application of the mobile phone Magic 5 has been started. After the camera application of the mobile phone Magic 5 is started, the mobile phone Magic 5 displays an interface corresponding to the photographing service called across devices. The user may perform photographing on the mobile phone Magic 5 side, and transmit a photo obtained through photographing to the notebook computer.

For the interface on the mobile phone Magic 5 side and the process of photographing and transmitting the photo, refer to FIG. 6A to FIG. 6C and related descriptions. The process is not described in detail again.

For a schematic diagram of an interface on the tablet computer after the mobile phone Magic 5 transmits a photo 171 obtained through photographing to the tablet computer Pad V8, refer to an interface 26 shown in FIG. 12A.

The service window 251 on the notebook computer disappears, and a thumbnail 261 of the photo 171 obtained by calling the photographing service of the mobile phone Magic 5 is displayed in a lower right corner of the screen of the notebook computer.

In an example, the current interface 26 includes an editing window of an application in which a picture can be inserted, and the user may insert the photo 171 into the editing window through a drag gesture. For a detailed process, refer to the dragging process shown in FIG. 7 and FIG. 8.

In another example, the current interface 26 does not include an editing window of an application in which a picture can be inserted, and the thumbnail 261 of the photo 171 disappears after being displayed for a period of time (for example, displayed for 10 seconds, 30 seconds, 1 minute, or 3 minutes). Certainly, the photo 171 is already stored in the notebook computer. For example, the photo is stored in a magnetic disk of the notebook computer. The user may access the photo 171 stored in the magnetic disk of the notebook computer through a gallery application. When accessing the photo 171 stored in the magnetic disk of the notebook computer, the user may edit the photo 171 (for example, cropping or doodling), and may further share the photo to other applications (for example, a document editing application, an instant messaging application, and a printing application).

As shown in FIG. 12B, after the thumbnail 261 of the photo 171 disappears or is dragged to another editing interface, a service window 271 is displayed in the lower right corner of the notebook computer.

In another example, while the thumbnail 261 of the photo is displayed on the interface 26, the notebook computer may also display a service window 271 (an example of a second window). In other words, although not shown in the figure, the thumbnail 261 of the object transmitted back and the service window 271 may be simultaneously displayed on the interface. In a specific implementation, different display positions may be set, so that display of the two is not mutually affected.

The service window 271 includes prompt information: photographing service, connected to "Magic 5". This prompt information is used to indicate that the user has established a cross-device call connection to the mobile phone Magic 5 and has called the photographing service of the mobile phone Magic 5.

The service window 271 further includes a control 2711, a control 2712 (an example of a seventh control), and a control 2713, where the control 2711 is used to close the current service window 271. The control 2712 is used to re-call the photographing service of the mobile phone Magic 5 to take a photo. The control 2713 is used to disconnect the cross-device call connection between the notebook computer and the mobile phone Magic 5.

Certainly, while the thumbnail 261 of the photo is displayed, after the photographing service of the mobile phone Magic 5 is re-called to take a photo, a thumbnail of a photo newly obtained through photographing may be stacked above or below the thumbnail 261. This is not illustrated in this application.

In a specific implementation, if at least two photos are stacked together, a drag gesture starting from an area in which the stacked photos are located may trigger the electronic device to drag only a top photo. Certainly, the drag gesture starting from the area in which the stacked photos are located may also be set to trigger the electronic device to drag all the stacked photos.

In another example, if at least two photos are stacked together, by performing a tap operation (or double-tap operation), the user may trigger the electronic device to display a plurality of photos in a tiled manner; and a drag gesture starting from an area in which any photo displayed in a tiled manner is located may trigger the electronic device to drag the photo. Certainly, when the electronic device displays a plurality of photos in a tiled manner, by performing a corresponding operation (for example, by drawing a circle), the user may also trigger the electronic device to select the photos displayed in the tiled manner in the circled area. After all or part of the photos displayed in the tiled manner are selected, a drag gesture starting from the area in which the selected photos displayed in the tiled manner are located may trigger the electronic device to drag the selected photos displayed in the tiled manner. Certainly, other operations may also trigger one-time selection of all the photos displayed in the tiled manner.

In a practical application, if the electronic device receives a plurality of photos that are transmitted back, the plurality of photos that are transmitted back may also be directly displayed in the tiled manner.

In addition, the electronic device may also be set to display only one photo each time. When one photo transmitted back is received, a thumbnail of the newly received photo replaces a thumbnail of a previously displayed photo.

In a practical application, if the notebook computer calls the photographing service of the mobile phone, the user further wants to continue to call other services of the mobile phone through the notebook computer, such as the scanning service; and the user may cancel the call of the current photographing service by tapping the control 2511 in the window 251, but does not disconnect the cross-device call connection between the notebook computer and the mobile phone, and then by double-tapping the control 242 on the taskbar, triggers the notebook computer to re-call the scanning service of the mobile phone in the manner shown in FIG. 11A and FIG. 11B; or the user may disconnect the cross-device call connection between the notebook computer and the mobile phone by tapping the control 2713 in the window 271, and then by double-tapping the control 242 on the taskbar, trigger the notebook computer to re-call the scanning service of the mobile phone in the manner shown in FIG. 11A and FIG. 11B. Certainly, an object of the operation in FIG. 11A and FIG. 11B is no longer the photographing service, but the scanning service. If the previous cross-device call connection has been disconnected, a cross-device call connection needs to be reestablished between the notebook computer and the mobile phone, and then a scanning service call is initiated through the cross-device call connection. If the previous cross-device call connection has not been disconnected, a scanning service call may be initiated through the established cross-device call connection.

In another embodiment of this application, if the notebook computer has called the photographing service of the mobile phone Magic 5, the user further wants to continue to call a cross-device service of a mobile phone Magic 4 through the notebook computer. Regardless of whether the notebook computer is using the photographing service of the mobile phone Magic 5, the user may continue to call the cross-device service of the other mobile phone Magic 4 directly by using the control 242 on the taskbar.

Based on the foregoing content, it may be understood that the notebook computer may simultaneously receive two materials of a same type or two materials of different types that are transmitted back by two mobile phones.

In this case, the materials received from each mobile phone may be displayed in two areas respectively based on different back transmission devices. For a manner of displaying materials in each area, refer to the manner of displaying a plurality of photos in the foregoing embodiment. The materials displayed in each area may be materials of different types.

Alternatively, materials of different types may be displayed in different areas based on different types of materials. For a manner of displaying materials in each area, refer to the manner of displaying a plurality of photos in the foregoing embodiment. The materials displayed in each area may be materials of the same type from different mobile phones.

Certainly, materials transmitted back by multiple devices may alternatively be displayed in one area. For a manner of displaying the materials in the area, refer to the manner of displaying a plurality of photos in the foregoing embodiment.

A process of using the notebook computer to call the photographing service of the mobile phone for photographing, and transmitting the photo obtained through photographing to the notebook computer is described with reference to FIG. 11A, FIG. 11B, FIG. 12A, and FIG. 12B in this embodiment of this application. In this process, the display of the user management window is triggered by using the control on the taskbar of the notebook computer, and a cross-device call is initiated through the user management window without being limited to a specific application. Moreover, the entire process is simple and efficient.

As shown in FIG. 12B, the service window 271 displayed on the notebook computer may trigger the re-call of the photographing service of the mobile phone to take a photo and transmit the photo back.

Certainly, in a practical application, the cross-device call connection between the notebook computer and the mobile phone may be kept alive for a period of time. In the keep-alive period, the notebook computer displays the service window 271. After the cross-device call connection between the notebook computer and the mobile phone is terminated or disconnected, the service window 271 disappears. Therefore, the service window also serves to remind the user that the cross-device call connection between the notebook computer and the mobile phone is valid. For content related to keep-alive duration of the cross-device call connection between the notebook computer and the mobile phone, refer to the description in the foregoing embodiment. Details are not described herein again.

The following describes an example in which the re-call of the photographing service of the mobile phone is triggered from the service window 271 of the notebook computer.

As shown in FIG. 13A, the user taps the control 2712 in the service window 271 to re-call the photographing service of the mobile phone Magic 5. In response to the tap operation on the control 2712 in the service window 271, the notebook computer sends a call instruction for the photographing service to the mobile phone Magic 5, where the call instruction can start the camera application of the mobile phone Magic 5. Correspondingly, after the camera application of the mobile phone Magic 5 is started, information indicating that the camera has been started may be returned to the notebook computer.

As shown in FIG. 13B, after receiving the information that is sent by the mobile phone Magic 5 and indicates that the camera application has been started, the notebook computer closes the service window 271 and displays a service window 251. The service window 251 shown in FIG. 13B is the same as the service window 251 shown in FIG. 11B.

For an interface on which a photographing process is performed on the mobile phone side after the camera application of the mobile phone is successfully started, refer to FIG. 6A to FIG. 6C. For an interface after the photo obtained through photographing on the mobile phone side is transmitted back to the tablet computer side, refer to FIG. 7 and FIG. 8.

It may be understood that the process of triggering the notebook computer to re-call the photographing service on the mobile phone side by using the service window 271 as shown in FIG. 13A is simpler and more efficient.

In a specific implementation process, the service window 271 may be closed. For example, the control 2711 in the service window 271 shown in FIG. 12B is used to close the service window. When the service window is closed and the cross-device call connection between the notebook computer and the mobile phone is maintained, this embodiment of this application may further enable, in another manner, the notebook computer to re-call the photographing service on the mobile phone side.

As shown in FIG. 14A, the user taps the control 242 on the taskbar to trigger the electronic device to display a sidebar 281 on the right side of the screen. The sidebar 281 displays recent messages, recent documents, recent clipboard items, and the like. Because the display of the taskbar is independent of the currently displayed interface, in a practical application, the interface shown in FIG. 14A may be any interface. This interface may be denoted as a ninth interface. Certainly, the displayed sidebar is merely an example. In a practical application, a single-tap operation on the control 242 (an example of a sixteenth operation) may trigger the display of the service window 2811.

The service window 2811 (an example of a third window) displays recent messages. Content of the service window 2811 is the same as content of the service window 271. Therefore, the user may alternatively trigger the re-call of the photographing service of the mobile phone through the service window 2811 on the sidebar.

In an example, the user taps (an example of a seventeenth operation) a control 28111 (an example of an eighth control) in the service window 2811 to re-call the photographing service of the mobile phone Magic 5. In response to the tap operation on the control 28111 in the service window 2811, the notebook computer sends a call instruction for the photographing service to the mobile phone Magic 5, where the call instruction can start the camera application of the mobile phone Magic 5. Correspondingly, after the camera application of the mobile phone Magic 5 is started, information indicating that the camera has been started may be returned to the notebook computer.

As shown in FIG. 14B, after receiving the information that is sent by the mobile phone Magic 5 and indicates that the camera application has been started, the notebook computer closes the sidebar 281 and displays a service window 251 (an example of a fourth window). The service window 251 shown in FIG. 14B is the same as the service window 251 shown in FIG. 11B.

For an interface on which a photographing process is performed on the mobile phone side after the camera application of the mobile phone is successfully started, refer to FIG. 6A to FIG. 6C. For an interface after the photo obtained through photographing on the mobile phone side is transmitted back to the tablet computer side, refer to FIG. 7 and FIG. 8.

It may be understood that the process of triggering the notebook computer to re-call the photographing service on the mobile phone side by using the service window 2811 on the sidebar as shown in FIG. 14A is also relatively simple and efficient.

Similarly, the re-call of the photographing service of the mobile phone by the notebook computer may alternatively be triggered from the mobile phone. For the process in which the re-call of the photographing service of the mobile phone by the notebook computer is triggered from the mobile phone, refer to FIG. 10A and FIG. 10B, FIG. 6A to FIG. 6C, and FIG. 12A and FIG. 12B.

Certainly, because the mobile phone is called by the notebook computer Magic Book 14 in this case, content displayed in the floating window 231 is: service sharing and photographing service, and content "photographed" by this device will be transmitted to "Magic Book 14".

The foregoing embodiment merely uses an example in which the photographing service is called to obtain a photo. In a practical application, objects in other forms may also be received through other cross-device services. For example, an object received by a caller may alternatively be a document, a text, or other content.

When the received object is a picture, the screen displays a thumbnail of the received picture, and the thumbnail may be displayed in a portrait orientation or a landscape orientation.

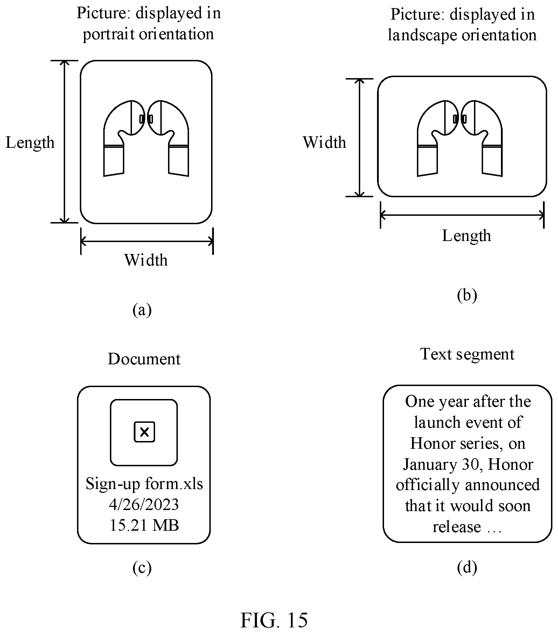

For example, as shown in (a) in FIG. 15, when an aspect ratio is greater than 1, the display is in the portrait orientation; or as shown in (b) in FIG. 15, when an aspect ratio is less than 1, the display is in the landscape orientation.

As shown in (c) in FIG. 15, when the received object is a document (for example, a document generated from a table extracted through table extraction), an icon, a name, a date, and a size of the document are displayed.

As shown in (d) in FIG. 15, when the received object is a text (for example, text content extracted through scanning or text recognition), part or all of the content in the text is displayed.

Certainly, the displayed content may also be understood as an identifier of the object, and identifiers of objects of different types may be different. In addition, after the caller receives an object transmitted by a callee, the object is displayed in a lower left corner or a lower right corner of the screen. If the object is not dragged by the user to an editing interface or does not disappear, and the user obtains another object on the callee side and transmits the object to the caller, two objects are displayed in the lower left corner or the lower right corner of the screen of the caller. The two objects may be displayed in a stacked manner, for example, in an order in which the objects are received by the caller, where an object received first is placed below, and an object received later is placed above.

In another example, when the receiver is an Android system, the object may be displayed in the lower left corner of the screen; or when the receiver is a Windows system, the object may be displayed in the lower right corner of the screen. Certainly, for other systems, the received object may also be displayed in the lower left corner or the lower right corner of the screen based on a situation, and certainly, may also be displayed at other positions on the screen. This is not limited in this embodiment of this application.

In this embodiment of this application, a plurality of interfaces are provided, and on the interfaces, there are some windows or controls for triggering execution of a next step or display of a next interface. Content displayed in these windows or controls is merely an example.

In addition, other content on the interfaces that is unrelated to these windows or controls is used merely as an example, and it does not indicate necessary presence of the other content on the interfaces.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

An embodiment of this application further provides a computer-readable storage medium. The computer-readable storage medium stores a computer program. When the computer program is executed by a processor, the steps in the foregoing method embodiments may be implemented.

An embodiment of this application further provides a computer program product. When the computer program product runs on an electronic device, the electronic device is enabled to implement the steps in the foregoing method embodiments.

An embodiment of this application further provides a cross-device service calling system. The cross-device service calling system includes a first electronic device and a second electronic device. The first electronic device and the second electronic device can implement the foregoing cross-device service calling method.

When the integrated unit is implemented in the form of a software functional unit and sold or used as an independent product, the integrated unit may be stored in a computer-readable storage medium. Based on such an understanding, all or a part of the processes of the method in the foregoing embodiment may be implemented by related hardware instructed by a computer program. The computer program may be stored in a computer-readable storage medium. When the computer program is executed by a processor, the steps of the foregoing method embodiment may be implemented. The computer program includes computer program code, where the computer program code may be source code, object code, an executable file, some intermediate forms, or the like. The computer-readable medium may include at least any entity or apparatus that can carry the computer program code to a first device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disc. According to legislation and patent practice in some jurisdictions, the computer-readable medium cannot be an electrical carrier signal or a telecommunication signal.

An embodiment of this application further provides a chip system. The chip system includes a processor. The processor is coupled to a memory, and the processor executes a computer program stored in the memory, to implement the steps in any method embodiment of this application. The chip system may be a single chip or a chip module including a plurality of chips.

In the foregoing embodiments, the descriptions of the embodiments have respective focuses. For a part that is not detailed or described in an embodiment, reference may be made to related descriptions in other embodiments.

Persons of ordinary skill in the art may be aware that units and method steps in the examples described with reference to embodiments disclosed in this specification can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of this application.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A cross-device service calling method, comprising:
displaying, by a first electronic device, a first interface, wherein the first interface is an interface of a first application;
after receiving a first operation, displaying, by the first electronic device, a second interface, wherein the second interface comprises a first control, and the first control is related to a first service of a second electronic device;
after receiving a second operation performed on the first control, sending, by the first electronic device, a first instruction to the second electronic device;
after receiving the first instruction, displaying, by the second electronic device, a third interface, wherein the third interface comprises a second control, and the third interface is an interface corresponding to the first service of the second electronic device;
after receiving a third operation performed on the second control, sending, by the second electronic device, a first object obtained through the first service to the first electronic device;
after receiving the first object, displaying, by the first electronic device, an identifier of the first object;
after receiving a fourth operation, displaying, by the first electronic device, a fourth interface, wherein the fourth interface comprises an editing window of a second application and the identifier of the first object; and
after receiving a fifth operation performed on an area in which the identifier of the first object is located, inserting, by the first electronic device, the first object into an editing area of the editing window of the second application.

2. The method according to claim 1, wherein the first operation comprises a sixth operation and a seventh operation, the sixth operation is a swipe operation starting from a top of a screen of the first electronic device, and the displaying, by the first electronic device, a second interface after receiving a first operation comprises:
after receiving the sixth operation, displaying, by the first electronic device, a smart interconnection card; and
after receiving the seventh operation, displaying, by the first electronic device, the second interface, wherein the seventh operation is performed on an area in which the smart interconnection card is located.

3. The method according to claim 1, wherein the first interface comprises a taskbar, the taskbar comprises a first icon, and the first operation is an operation performed on the first icon.

4. The method according to claim 2 or 3, wherein
the second operation is a tap operation performed on the first control; or
the second interface comprises an icon of the first electronic device, and the second operation is a drag operation starting from an area in which the first control is located and ending at an area in which the icon of the first electronic device is located.

5. The method according to claim 4, wherein the second operation is a drag operation starting from the area in which the first control is located and ending at the area in which the icon of the first electronic device is located, and the method further comprises:
in a dragging process corresponding to the second operation, displaying a first floating control at a touch point of the second operation, wherein the first floating control comprises an icon of the first service and/or text information of the first service, and the first floating control is used to prompt a user that the first floating control currently being dragged is the first service; and
after the second operation ends, displaying the icon of the first service and/or the text information of the first service around the icon of the first electronic device.

6. The method according to claim 2, wherein after the receiving, by the first electronic device, a second operation performed on the first control, and before the displaying, by the first electronic device, an identifier of the first object, the method further comprises:
displaying, by the first electronic device, a fifth interface, wherein the fifth interface comprises a second floating control and a blocking window, the second floating control comprises a smart interconnection icon and/or first text information, and the blocking window is used to prompt a user that the first electronic device is calling the first service of the second electronic device.

7. The method according to claim 6, wherein the displaying, by the first electronic device, an identifier of the first object comprises:
canceling, by the first electronic device, display of the blocking window on the fifth interface, and displaying the identifier of the first object on the fifth interface.

8. The method according to claim 7, wherein the first interface comprises an editing window of the first application, and the fifth interface also comprises an editing window of the first application; and
after the displaying, by the first electronic device, the identifier of the first object on the fifth interface, the method further comprises:
receiving, by the first electronic device, an eighth operation, wherein the eighth operation is a drag operation starting from the area in which the identifier of the first object is located and ending at an editing area of the editing window of the first application; and
inserting, by the first electronic device, the first object into the editing area of the editing window of the first application in response to the eighth operation.

9. The method according to claim 1, wherein the fifth operation is a drag operation starting from the area in which the identifier of the first object is located and ending at the editing area of the editing window of the second application.

10. The method according to claim 7, wherein after the displaying, by the first electronic device, the identifier of the first object on the fifth interface, the method further comprises:
after receiving a ninth operation performed on the second floating control of the fifth interface, sending, by the first electronic device, a second instruction to the second electronic device;
after receiving the second instruction, displaying, by the second electronic device, a sixth interface, wherein the sixth interface comprises a third control, and the sixth interface is an interface corresponding to the first service of the second electronic device;
after receiving a ninth operation performed on the third control, sending, by the second electronic device, a second object obtained through the first service to the first electronic device; and
after receiving the second object, displaying, by the first electronic device, an identifier of the second object.

11. The method according to claim 10, wherein when the first electronic device displays multiple identifiers of multiple objects received from the first electronic device, the multiple identifiers of the multiple objects are displayed in a stacked or tiled manner; or an identifier of a most recently received object is displayed and display of identifiers of historically received objects is canceled.

12. The method according to claim 10, wherein the ninth operation comprises a tenth operation and an eleventh operation, and the sending, by the first electronic device, a second instruction to the second electronic device after receiving a ninth operation performed on the second floating control of the fifth interface comprises:
after receiving the tenth operation performed on the second floating control of the fifth interface, displaying, by the first electronic device, a first floating window, wherein the first floating window comprises a fourth control, and the fourth control is related to the first service of the second electronic device; and
after receiving the eleventh operation performed on the fourth control, sending, by the first electronic device, the second instruction to the second electronic device.

13. The method according to claim 1, wherein after the displaying, by the first electronic device, an identifier of the first object, the method further comprises:
after receiving a twelfth operation, displaying, by the first electronic device, a seventh interface, wherein the seventh interface comprises a fifth control, and the fifth control is related to a second service of the second electronic device; and
after receiving a thirteenth operation performed on the fifth control, sending, by the first electronic device, a third instruction to the second electronic device, wherein the third instruction is used to call the second service of the second electronic device to obtain a third object.

14. The method according to claim 1, wherein after the displaying, by the first electronic device, an identifier of the first object, the method further comprises:
after receiving a fourteenth operation, displaying, by the first electronic device, an eighth interface, wherein the eighth interface comprises a sixth control, and the sixth control is related to a first service of a third electronic device; and
after receiving the fourteenth operation performed on the sixth control, sending, by the first electronic device, a fourth instruction to the third electronic device, wherein the fourth instruction is used to call the first service of the third electronic device to obtain a fourth object.

15. The method according to claim 4, wherein the second operation is a tap operation performed on the first control, and after the receiving, by the first electronic device, a second operation performed on the first control, and before the displaying, by the first electronic device, an identifier of the first object, the method further comprises:
displaying, by the first electronic device, a first window, wherein the first window is used to prompt a user that the first electronic device is calling the first service of the second electronic device.

16. The method according to claim 15, wherein before the displaying, by the first electronic device, an identifier of the first object, the method further comprises:
canceling, by the first electronic device, display of the first window.

17. The method according to claim 16, wherein after the displaying, by the first electronic device, an identifier of the first object for first duration, the method further comprises:
canceling, by the first electronic device, display of the identifier of the first object.

18. The method according to any one of claims 15 to 17, wherein after the canceling, by the first electronic device, display of the first window, the method further comprises:
displaying, by the first electronic device, a second window, wherein the second window comprises a seventh control;
after the first electronic device receives a fifteenth operation performed on the seventh control, canceling, by the first electronic device, display of the second window; and
after canceling display of the second window, displaying, by the first electronic device, the first window.

19. The method according to any one of claims 15 to 18, wherein after the displaying, by the first electronic device, an identifier of the first object, the method further comprises:
displaying, by the first electronic device, a ninth interface, wherein the ninth interface is any interface comprising the taskbar, and the taskbar comprises the first icon;
after receiving a sixteenth operation performed on the first icon, displaying, by the first electronic device, a third window, wherein the sixteenth operation is different from the first operation, the third window comprises an eighth control, and the eighth control is related to the first service of the second electronic device; and
after receiving a seventeenth operation performed on the eighth control, canceling, by the first electronic device, display of the third window, displaying a fourth window, and sending a fifth instruction to the second electronic device, wherein the fifth instruction is used to call the first service of the second electronic device, and the fourth window is used to prompt the user that the first electronic device is calling the first service of the second electronic device.

20. The method according to claim 1, wherein the third operation comprises an eighteenth operation and a nineteenth operation; and the sending, by the second electronic device, a first object obtained through the first service to the first electronic device after receiving a third operation performed on the second control comprises:
after the second electronic device receives the eighteenth operation performed on the second control, displaying, by the second electronic device, a tenth interface, wherein the tenth interface comprises the first object and a ninth control; and
after receiving the nineteenth operation performed on the ninth control, sending, by the second electronic device, the first object to the first electronic device.

21. The method according to claim 20, wherein after the receiving, by the second electronic device, the nineteenth operation performed on the ninth control, the method further comprises:
displaying, by the second electronic device, an eleventh interface, wherein a status bar of the eleventh interface displays a third floating control, and the eleventh interface is a system desktop or an interface displayed by the second electronic device before the third interface is displayed; and
after the second electronic device receives a twentieth operation performed on the third floating control, displaying, by the second electronic device, a twelfth interface.

22. The method according to claim 21, wherein the twentieth operation comprises a twenty-first operation and a twenty-second operation, and the displaying, by the second electronic device, a twelfth interface after the second electronic device receives a twentieth operation performed on the third floating control comprises:
after receiving the twenty-first operation performed on the third floating control, displaying, by the second electronic device, a fifth window, wherein the fifth window comprises a tenth control, and the tenth control is related to the first service of the second electronic device; and
after receiving the twenty-second operation performed on the tenth control, displaying, by the second electronic device, a thirteenth interface, wherein the thirteenth interface is used to obtain an object through the first service of the second electronic device.

23. A cross-device service calling system, comprising a first electronic device and a second electronic device, wherein the first electronic device and the second electronic device are configured to implement the method according to any one of claims 1 to 22.

24. A computer-readable storage medium, wherein the computer-readable storage medium stores a computer program, and when the computer program is executed by one or more processors, the method according to any one of claims 1 to 22 is implemented.
